# EUROPÄISCHE PATENTSCHRIFT

(11) **EP 2 438 676 B1**
(45) Veröffentlichungstag und Bekanntmachung des Hinweises auf die Patenterteilung: **16.09.2015**
(21) Anmeldenummer: 10727356.7
(22) Anmeldetag: 01.06.2010
(51) Int. Cl.: G05B 9/02

(54) **SICHERHEITSSCHALTUNG UND DAMIT AUSGESTATTETE VORRICHTUNGEN**
PROTECTION CIRCUIT AND DEVICES PROVIDED WITH SUCH A CIRCUIT
CIRCUIT DE SÉCURITÉ ET DISPOSITIFS ÉQUIPÉS DE CELUI-CI

(30) Priorität: 02.06.2009 DE 102009023491
(43) Veröffentlichungstag der Anmeldung: 11.04.2012
(73) Patentinhaber: DORMA Deutschland GmbH, 58256 Ennepetal (DE)
(72) Erfinder: KAPANSKI, Kai, 42389 Wuppertal (DE)
(74) Vertreter: Balder IP Law, S.L.
(86) Internationale Anmeldenummer: PCT/EP2010/003302
(87) Internationale Veröffentlichungsnummer: WO 2010/139445

(56) Entgegenhaltungen:
- EP-A1- 1 635 446
- EP-A1- 1 770 456
- DE-A1- 3 638 035
- DE-A1- 10 105 201
- DE-A1- 10 120 287
- DE-C1- 3 720 996

## Beschreibung

Die Erfindung betrifft eine Sicherheitsschaltung insbesondere für Türschlösser sowie mit einer derartigen Sicherheitsschaltung ausgestattete Vorrichtungen, insbesondere Verriegelungseinrichtungen.

Bei verschiedenen elektrischen Vorrichtungen, wie beispielsweise Türschlössern, Drehtürantrieben und dergleichen, ist es erforderlich, in einem Notfall Verriegelungen aufzuheben oder zu schalten. DE 3 638 035 offenbart eine solche Regelung zum sicheren Abschalten eines Stromversorgungsgeräts. Aufgrund von Kurzschlüssen oder Fehlmontagen kann es möglich sein, dass die beschriebenen Funktionen nicht mehr bereitgestellt werden können.

Bei einer Fluchttür kann dies somit zu einem Zustand führen, bei dem Personen unter Umständen einen Raum, in dem es brennt, nicht mehr verlassen können, was ein erhebliches Risiko darstellt.

Aufgabe der Erfindung ist es daher, die Sicherheit von elektrischen Vorrichtungen zu verbessern.

Diese Aufgabe wird durch den Gegenstand des Anspruchs 1 gelöst. Vorteilhafte Weiterbildungen der Erfindung sind in den Unteransprüchen angegeben.

Eine erfindungsgemäße Schaltung weist einen Sensor auf, der zwischen eine gesteuerte Schaltung und einen Sensoreingang einer Ansteuerschaltung geschaltet ist. Die Ansteuerschaltung weist ferner zumindest einen Dateneingang auf, über den der Ansteuerschaltung Daten eingegeben werden. Diese Daten repräsentieren einen Sollzustand der gesteuerten Schaltung. Die Ansteuerschaltung weist erfindungsgemäß ferner zumindest einen Steuerausgang auf. Die Ansteuerschaltung ist eingerichtet, auf Basis von Eingangssignalen vom Sensor und den eingegebenen Sollzustands-Daten vorzugsweise rückwirkungsfrei zu ermitteln, ob sich die gesteuerte Schaltung im Sollzustand befindet oder nicht. Rückwirkungsfrei bedeutet, dass ein sensorseitiger Fehler keinen schädlichen Einfluss auf die Arbeitsweise der gesteuerten Schaltung hat. Der Steuerausgang ist derart mit der gesteuerten Schaltung gekoppelt, dass die Ansteuerschaltung in der Lage ist, die gesteuerte Schaltung ebenfalls rückwirkungsfrei in den Sollzustand zu bringen, sofern ermittelt wurde, dass sich die gesteuerte Schaltung nicht im Sollzustand befindet. Dadurch ist es möglich, die gesteuerte Schaltung aus einem unerwünschten in einen erwünschten Zustand zu überführen, ohne dass von außen, d. h. durch eine Person, ein Eingriff notwendig ist. Die gesteuerte Schaltung umfasst vorzugsweise zumindest einen elektrischen Verbraucher.

Der Sollzustand kann dabei ein Versorgen des zumindest einen elektrischen Verbrauchers mit elektrischer Energie oder auch ein Abschalten einer Energiezufuhr zu dem elektrischen Verbraucher bedeuten.

Vorzugsweise ist in der Schaltung erfindungsgemäß zwischen Steuerausgang der Ansteuerschaltung und Masse ein Sendeteil eines Optokopplers geschaltet, wohingegen ein Empfangsteil dieses Optokopplers zwischen einem Schaltelement und Masse geschaltet ist. Das Schaltelement selbst ist zwischen einen Energieversorgungseingang der gesteuerten Schaltung und den elektrischen Verbraucher geschaltet.

Der Sensor ist vorzugsweise mittels eines anderen Optokopplers gebildet. Ein Sendeteil dieses anderen Optokopplers ist zwischen gesteuerte Schaltung und Masse geschaltet, und zwar in Stromrichtung gesehen vor dem elektrischen Verbraucher. Ein Empfangsteil dieses anderen Optokopplers wiederum ist zwischen einen Sensoreingang der Ansteuerschaltung und Masse geschaltet.

Optokoppler haben den Vorteil, dass sie zwei Schaltkreise, hier die Ansteuerschaltung und die gesteuerte Schaltung, voneinander galvanisch trennen bzw. elektrisch isolieren. Somit gibt es keine Rückkopplung zwischen diesen beiden Schaltkreisen, wodurch die Betriebssicherheit erhöht wird.

Vorzugsweise ist die Schaltung für eine Notaus-Schaltung für eine Türverriegelung vorgesehen.

Vorzugsweise sind die Sollzustands-Daten auf ein Energieversorgungssignal für die Ansteuerschaltung moduliert. Dies bietet den Vorteil, dass Leitungen eingespart werden können, die zur Ansteuerschaltung zu führen sind.

Die Schaltung weist vorzugsweise ferner einen Gleichspannungswandler auf, der zwischen eine Energieversorgung und Spannungssignal-Anschlüsse der Ansteuerschaltung geschaltet ist. Dadurch ist es möglich, die Ansteuerschaltung an eine Energieversorgung anzuschließen, bei der eine andere Spannung anliegt als eine für die Ansteuerschaltung erforderliche Betriebsspannung. Dadurch müssen keine gesonderten Energieversorgungsleitungen verlegt werden, an denen die Betriebsspannung anliegt.

Erfindungsgemäß ist die Ansteuerschaltung in einem integrierten Schaltkreis oder alternativ als Mikroprozessor ausgebildet. Die Ansteuerschaltung ist somit als Modul ausgeführt und kann als Bauelement beispielsweise auf eine Leiterplatte gelötet werden.

Eine erfindungsgemäße Vorrichtung ist mit einer der vorbeschriebenen Schaltungsausführungen versehen. Vorzugsweise ist die erfindungsgemäße Vorrichtung ein Türschloss, Drehflügelantrieb, Türschließer, Karusselltürantrieb, Schiebetürantrieb, Bogenschiebetürantrieb, Kreisschiebetürantrieb, Trennwandmodulantrieb, Falttürflügelantrieb oder dergleichen.

Bei einem Türschloss ist besagter Verbraucher vorzugsweise eine Elektrospule oder Elektrospulenschaltung, die eingerichtet ist, bei einem Bestromen eine Falle und/oder einen Riegel des Türschlosses in einer jeweiligen Entriegelungsstellung zu halten. D. h. bereits in einem Türschloss vorhandene Teile werden genutzt, um eine Verriegelung oder Entriegelung aus der Verriegelungsstellung zu bewirken. Dadurch werden Kosten bei einer etwaigen Nachrüstung gering gehalten.

Im Falle einer zu bewirkenden Entriegelung ist an einer jeweiligen, der Elektrospule zugewandten Seite der Falle und/oder des Riegels jeweils ein Anker aus einem magnetisierbaren Material angeordnet. Der bzw. die Anker wird bzw. werden bei einem Bestromen der Elektrospule von dieser in eine Entriegelungsrichtung angezogen, die üblicherweise einer Richtung in einen Innenraum des Türschlosses hinein entspricht. Dies ist ein besonders einfacher Aufbau, der mit relativ wenig zusätzlichen Teilen auskommt.

Weitere Merkmale und Vorteile der Erfindung ergeben sich aus der nachfolgenden Beschreibung bevorzugter Ausführungsformen. Es zeigen:
- Figur 1: ein Blockschaltbild eines Regelkreises,
- Figur 2: einen Schaltplan für den Regelkreis von Figur 1, gemäß einer ersten Ausführungsform der Erfindung,
- Figur 3: einen Schaltplan für den Regelkreis von Figur 1, gemäß einer zweiten Ausführungsform der Erfindung,
- Figur 4: einen Schaltplan für den Regelkreis von Figur 1, gemäß einer dritten Ausführungsform der Erfindung,
- Figur 5: einen Schaltplan für den Regelkreis von Figur 1, gemäß einer vierten Ausführungsform der Erfindung,
- Figur 6: einen Schaltplan für den Regelkreis von Figur 1, gemäß einer fünften Ausführungsform der Erfindung, gekoppelt mit einer Brandmeldeanlage,
- Figur 7: eine Platinenanordnung für die Schaltungen gemäß Figuren 2 bis 6,
- Figur 8: einen Schaltplan für den Regelkreis von Figur 1, gemäß einer sechsten Ausführungsform der Erfindung,
- Figur 9: Vorrichtungen für eine Türschloss-Verriegelung in verschiedenen Ausführungen und
- Figur 10: Vorrichtungen für eine Türschloss-Verriegelung in wiederum verschiedenen Ausführungen.

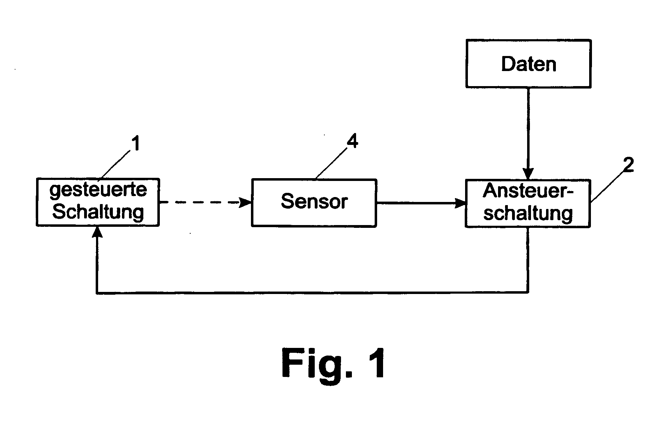

Wie in Figur 1 angedeutet, ist bei einem Regelkreis eine Ansteuerschaltung 2 gemäß einer Ausführungsform der Erfindung mit Dateneingängen versehen. Die Dateneingänge umfassen im Wesentlichen einen Eingang für Daten, die einen Sollzustand einer anzusteuernden bzw. gesteuerten Schaltung 1, insbesondere eines elektrischen Verbrauchers, repräsentieren.

Im Fall einer Notaus-Schaltung können der Ansteuerschaltung 2 bei Betätigen eines Notaus-Schalters Sollzustands-Daten eingegeben werden, die einen Nichtbetrieb der gesteuerten Schaltung 1 repräsentieren.

Zwischen gesteuerter Schaltung 1 und Ansteuerschaltung 2 ist eine Überwachungsschaltung vorzugsweise in Form eines Sensors 4 oder einer Sensorschaltung geschaltet, der bzw. die in der Lage ist, einen interessierenden aktuellen, d. h. Istzustand der gesteuerten Schaltung zu erfassen. Die somit vom Sensor 4 bzw. der Sensorschaltung ermittelten Istzustands-Daten werden der Ansteuerschaltung 2 über vorzugsweise gesonderte Eingänge eingegeben.

Im Fall der Notaus-Schaltung kann der Istzustand eine Ermittlung eines Anliegens elektrischer Energie an einem Energieversorgungseingang der gesteuerten Schaltung 1 bedeuten.

Auf Basis der eingegebenen Istzustands- und Sollzustands-Daten ermittelt die Ansteuerschaltung 2, ob sich die gesteuerte Schaltung 1 im gewünschten Sollzustand befindet oder nicht. Wenn nicht, steuert die Ansteuerschaltung 2 über einen Ausgang die gesteuerte Schaltung 1 an, um sie in den gewünschten Sollzustand zu überführen.

Es handelt sich somit um einen Regelkreis.

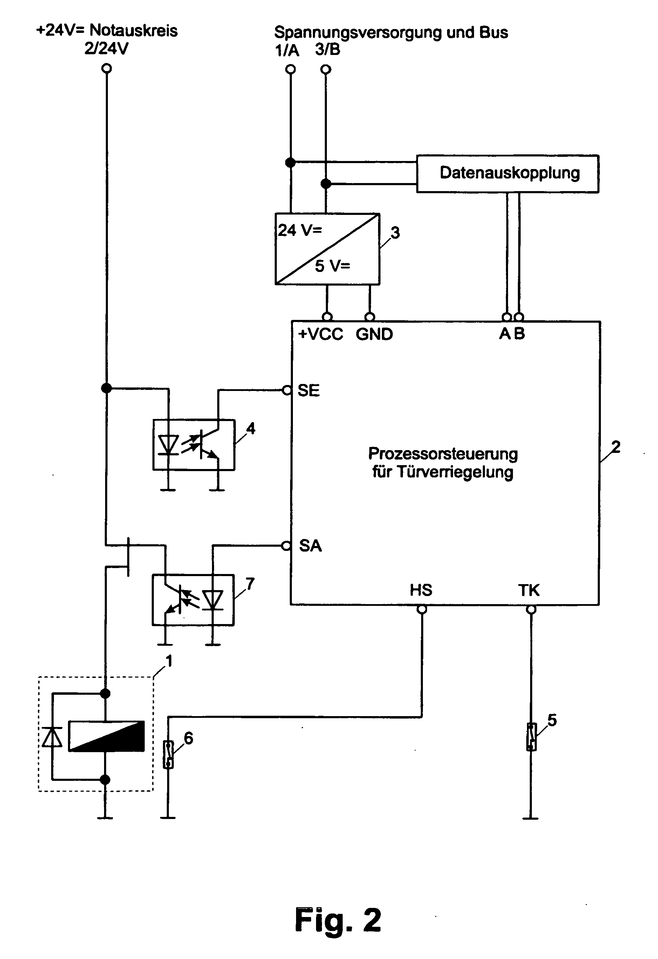

Figur 2 zeigt einen Schaltplan für einen derartigen Regelkreis, gemäß einer ersten Ausführungsform der Erfindung.

Die gesteuerte Schaltung 1 ist im gezeigten Fall mittels einer Elektrospule gebildet, die parallel mit einer Diode verschaltet ist. Die Diode hat in dem Fall die Funktion einer Freilaufdiode. Beim Abschalten der Stromversorgung zur Elektrospule bewirkt diese eine Selbstinduktion. Die parallel geschaltete Diode ermöglicht ein Weiterfließen des (Spulen-)Stroms. Die in der Spule gespeicherte magnetische Energie wird im Wesentlichen in der Diode und in den Spulenleitungen typischerweise thermisch umgesetzt. Dadurch werden hohe Spannungsspitzen an den Anschlüssen der Elektrospule verhindert bzw. vermieden.

Die Ansteuerschaltung 2 ist mittels einer Prozessorsteuerung gebildet, die vorzugsweise mittels eines integrierten Schaltkreises oder eines Mikroprozessors gebildet ist.

Der Sensor 4 ist hier mittels eines ersten Optokopplers gebildet. Der erste Optokoppler ist sendeteilseitig, d. h. beispielsweise Infrarot-LED-seitig, mit einem Eingang mit einem Energieversorgungseingang der angesteuerten Schaltung 1 gekoppelt. Empfangsteilseitig, d. h. beispielsweise fototransistorseitig, ist der erste Optokoppler eingangsseitig mit einem Steuereingang SE der Prozessorsteuerung gekoppelt. Ausgänge des ersten Optokopplers sind elektrisch auf Masse geschaltet. Um die angesteuerte Schaltung 1 ansteuern zu können, ist vorzugsweise ein zweiter Optokoppler 7 sendeteilseitig mit seinem sendeteilseitigen Eingang mit einem Steuerausgang SA der Prozessorsteuerung und empfangsteilseitig mit dem Eingang einer vorzugsweise mittels eines Transistors, vorzugsweise eines Feldeffekttransistors, gebildeten Treiberstufe gekoppelt.

Im Fall eines Feldeffekttransistors ist der zweite Optokoppler 7 mit dem Gate-Anschluss des Feldeffekttransistors gekoppelt. Sein Drain-Anschluss ist mit der Energieversorgung der angesteuerten Schaltung 1, d. h. mit einem Anschluss 2/24V, gekoppelt. Sein Source-Anschluss ist mit der gesteuerten Schaltung 1 gekoppelt.

Die Optokoppler bewirken eine galvanische Trennung zwischen dem in Figur 2 linken Schaltkreis, d. h. der mit einem Empfangsteil des ersten Optokopplers und einem Sendeteil des zweiten Optokopplers 7 gekoppelten Schaltung, und dem anderen, in Figur 2 rechten Schaltkreis, d. h. der mit einem Sendeteil des ersten und einem Empfangsteil des zweiten Optokopplers gekoppelten Schaltung.

Die Begriffe Sende- und Empfangsteil beziehen sich auf die inneren Bauteile der Optokoppler; eine jeweilige beispielsweise Infrarot-LED dient als Sendeteil, und ein jeweiliger, beispielsweise Fototransistor als Empfangsteil.

Die Prozessorsteuerung umfasst Eingänge A, B für Daten, die einen Sollzustand der gesteuerten Schaltung 1 repräsentieren, und vorzugsweise separate Eingänge +VCC, GND für eine Energieversorgung. Vorzugsweise ist die Prozessorsteuerung an eine 24 V - Gleichspannungsversorgung angeschlossen. Damit digitale Elemente innerhalb der Prozessorsteuerung mit einer für sie notwendigen 5 V - Gleichspannung versorgt werden, ist zwischen 24 V- Versorgungsanschlüssen 1/A, 3/B des Regelkreises und den Energieversorgungs-Eingängen +VCC, GND der Prozessorsteuerung ein Gleichspannungswandler 3 geschaltet.

Um die Anzahl notwendiger Anschlussleitungen so gering wie möglich zu halten, ist weiterhin vorzugsweise vorgesehen, dass die Sollzustands-Daten auf Energieversorgungssignale aufmoduliert sind. D. h. die Sollzustands-Daten werden mit über die Energieversorgungs-Anschlüsse 1/A, 3/B übertragen.

Zusätzlich kann der gesamte Regelkreis busfähig ausgebildet sein. Dazu weist die Datenauskopplungsschaltung einen Adressdekoder auf, der ermitteln kann, wenn Daten für den Regelkreis übermittelt worden sind. Der Adressdekoder kann aber auch als der Datenauskopplung nachgeschaltetes Bauelement angeordnet sein. Alternativ ist der Adressdekoder in die Prozessorsteuerung integriert.

Sind die übermittelten Daten gemäß einem Zeitmultiplex-Verfahren moduliert, kann der Adressdekoder entfallen.

Somit an den Anschlüssen 1/A, 3/B anliegende modifizierte Energie-Daten-Signale werden vorzugsweise parallel der Datenauskopplungsschaltung und dem Gleichspannungswandler 3 eingegeben.

Vorteilhafterweise weist die Prozessorsteuerung einen zusätzlichen Eingang TK auf, an den ein Türkontaktschalter 5, Stößelschalter oder sonstiger Sensor angeschlossen ist, mittels dessen die Prozessorsteuerung ermitteln kann, ob eine zugehörige Tür geöffnet oder geschlossen ist.

Dadurch ist es der Prozessorsteuerung beispielsweise möglich, eine Bestromung der Elektrospule zu unterbinden, solange die Tür geöffnet ist, sodass die Tür beispielsweise weiterhin manuell geöffnet bzw. vorzugsweise einmal geschlossen werden kann.

Zusätzlich weist die Prozessorsteuerung einen zusätzlichen Anschluss HS für eine Überwachung einer Funktionsweise der gesteuerten Schaltung bzw. des elektrischen Verbrauchers auf. Im Falle einer Elektrospule ist an diesen zusätzlichen Anschluss vorteilhafterweise ein Hall-Sensor 6 angeschlossen, mittels dessen die korrekte Funktionsweise der Elektrospule ermittelt werden kann.

Beispielsweise könnte die Prozessorsteuerung die Elektrospule derart ansteuern, dass diese mit elektrischer Energie versorgt wird. Im Fall beispielsweise eines Kurzschlusses würde bei der Prozessorsteuerung aber kein Rücksendesignal vom Hall-Sensor 6 eingehen. Damit ist die Prozessorsteuerung in der Lage, solch einen Zustand zu erkennen und geeignete Maßnahmen, wie beispielsweise das Aktivieren einer Warnanzeige, zu ergreifen. Insgesamt erhöht sich damit die Betriebssicherheit.

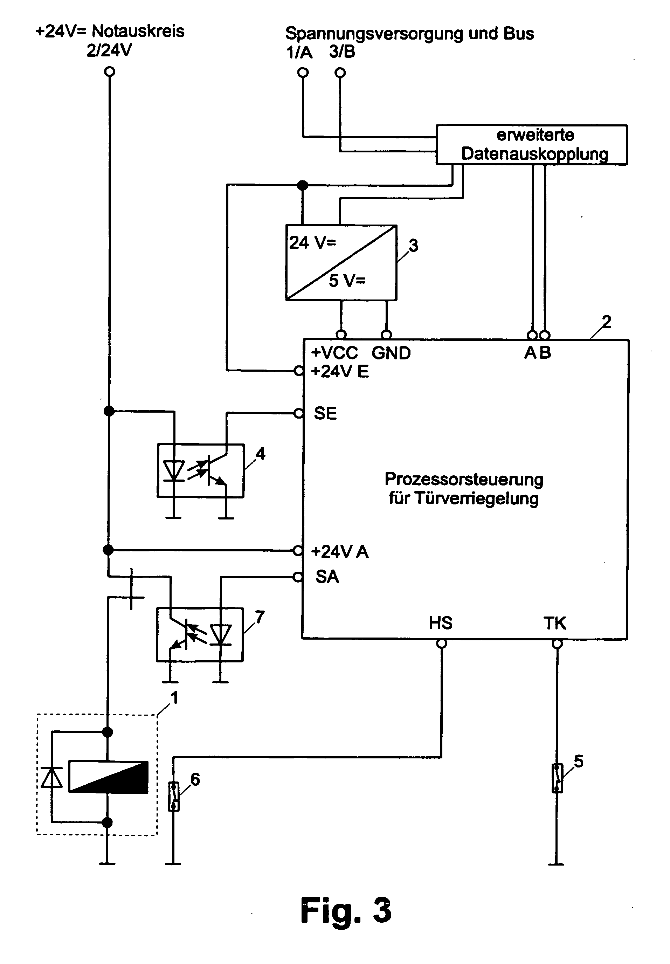

Bei einem in Figur 3 gezeigten Regelkreis-Schaltplan gemäß einer zweiten Ausführungsform der Erfindung ist vorzugsweise eine erweiterte Datenauskopplungsschaltung vorgesehen, die eingangsseitig mit den Anschlüssen 1/A, 3/B gekoppelt ist und vier Ausgänge aufweist, zwei Spannungsversorgungs-Ausgänge für um übertragene Daten bereinigte Gleichspannungssignale und zwei Daten-Ausgänge für die übermittelten Sollzustands-Daten. Die Spannungsversorgungs-Ausgänge sind mit korrespondierenden Eingängen des Gleichspannungswandlers 3 gekoppelt.

Wie weiterhin zu sehen, ist der 24 V - Spannungsausgang der erweiterten Datenauskopplungsschaltung mit einem 24 V - Eingang +24V E der Prozessorsteuerung gekoppelt. Die Prozessorsteuerung weist zudem einen 24 V - Ausgang +24V A auf, der mit dem in Figur 3 linken Schaltkreis gekoppelt ist, und zwar in Stromrichtung gesehen vor oder am Eingang von der Treiberstufe der gesteuerten Schaltung 1.

Im einfachsten Fall sind die beiden Anschlüsse +24V E und +24V A innerhalb der Prozessorsteuerung miteinander mittels einer Leitung gekoppelt. Alternativ ist eine Sicherung zwischengeschaltet. Zudem kann aus Gründen der Verpolungssicherheit eine Diode geschaltet sein.

Es ist somit möglich, den elektrischen Verbraucher auch dann mit Energie zu versorgen, wenn die Hauptenergieversorgung über den Anschluss 2/24V ausfällt, und erhöht damit die Ausfallsicherheit der gesamten Schaltung.

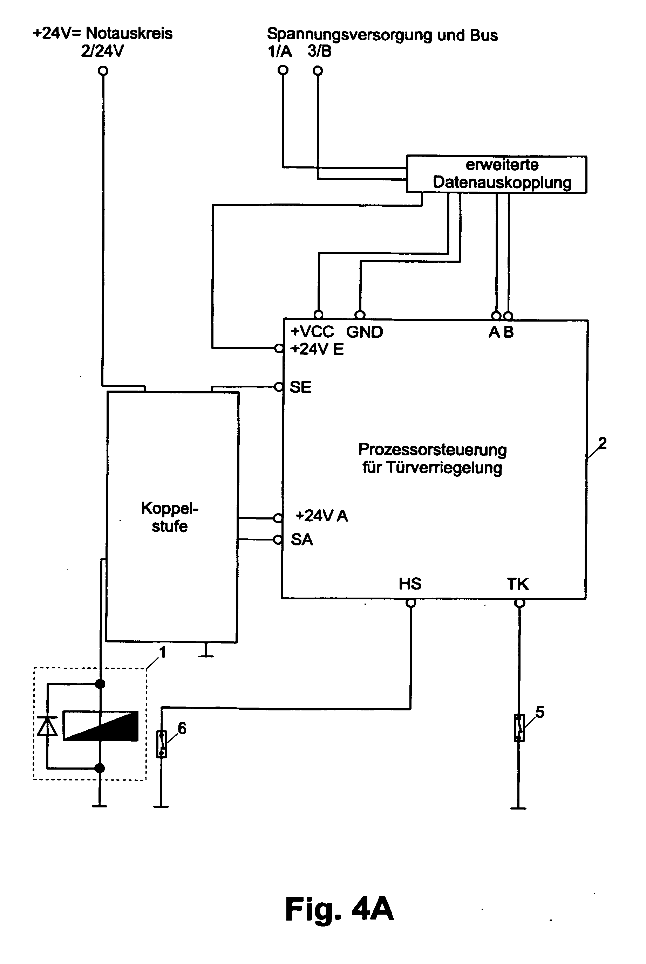

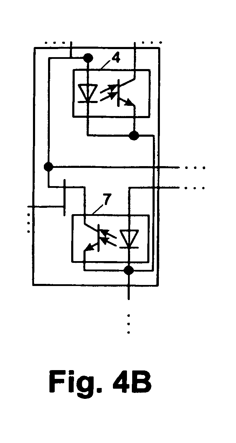

Gemäß einem in Figur 4A gezeigten Regelkreis-Schaltplan gemäß einer dritten Ausführungsform der Erfindung sind der erste Optokoppler und der zweite Optokoppler 7 sowie die Treiberstufe durch eine Koppelstufe ersetzt bzw. in diese integriert. Die Koppelstufe weist intern, wie in Figur 4B gezeigt, vorzugsweise eine Verriegelung gemäß Figur 2 bzw. Figur 3 auf. Der Vorteil solch einer Koppelstufe ist die Konzentration der Kopplung der beiden Schaltkreise auf ein Modul, sodass zum Verschalten lediglich die Anschlüsse der Koppelstufe anzuschließen sind. Dies vereinfacht einen Aufbau solch einer Schaltung.

Insbesondere ist die komplette Schaltung in einen bestehenden Schaltkreis mit beispielsweise einer Elektrospule als Verbraucher integrierbar; die Koppelstufe ist einfach zwischen den Anschluss 2/24V und den elektrischen Verbraucher zu schalten. Die Verbindungsleitung zwischen Anschluss 2/24V und elektrischem Verbraucher muss lediglich aufgetrennt und an jeweilige Anschlüsse der Koppelstufe angeschlossen werden.

Der Gleichspannungswandler 3 ist bei dieser Ausführungsform vorzugsweise in die erweiterte Datenauskopplungsschaltung integriert, was die gesamte Verschaltung und den gesamten Aufbau weiterhin vereinfacht. Es gibt zumindest drei Spannungsanschlüsse, zwei für die 5 V - Gleichspannungsversorgung der Prozessorsteuerung bzw. deren Anschlüsse +VCC und GND, und einen, an dem eine +24 V Gleichspannung anliegt, für den Anschluss +24V E der Prozessorsteuerung.

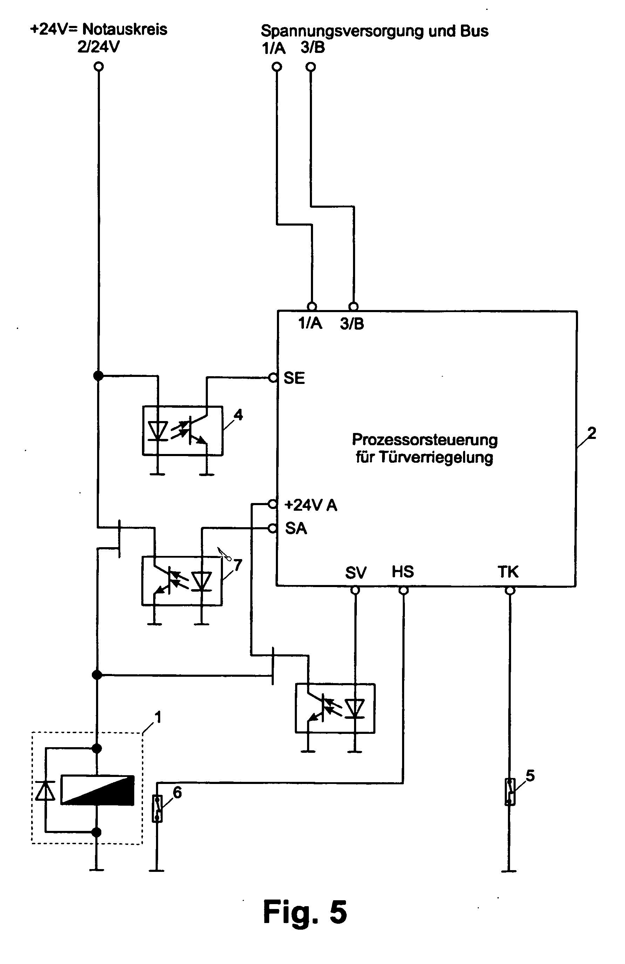

Damit der Strom in der gesteuerten Schaltung 1 aufgrund einer möglichen doppelten Energieeinspeisung über den Anschluss 2/24 V der gesteuerten Schaltung 1 und den Anschluss +24V A der Prozessorsteuerung nicht zu hoch ist, ist bei einem in Figur 5 gezeigten Regelkreis-Schaltplan gemäß einer vierten Ausführungsform der Erfindung vorgesehen, dass der Ausgang +24V A der Prozessorsteuerung nicht unmittelbar bzw. direkt mit der gesteuerten Schaltung 1 gekoppelt ist.

Vielmehr ist eine zusätzliche Schaltung vorgesehen, die ähnlich der Schaltung zwischen Steuerausgang SA der Prozessorsteuerung und der gesteuerten Schaltung 1 in Figur 2 gestaltet ist. Hierzu ist an der Prozessorsteuerung ein zusätzlicher Spannungsversorgungs-Ausgang SV vorgesehen, der mit einem Sendeteil eines dritten Optokopplers gekoppelt ist. Der Anschluss +24V A ist mit einem Drain-Anschluss eines als zweite Treiberstufe beispielhaft genutzten zweiten Feldeffekttransistors gekoppelt. Ein Source-Anschluss dieses Feldeffekttransistors wiederum ist mit der gesteuerten Schaltung 1 gekoppelt. Empfangsteilseitig ist der dritte Optokoppler mit dem Gate-Anschluss des zweiten Feldeffekttransistors gekoppelt.

Damit ist es möglich, die über den Anschluss 1/A bzw. den Anschluss +24V A anliegende elektrische Energie nur im Bedarfsfall in die gesteuerte Schaltung 1 einzuspeisen. Zudem gibt es nun auch hier eine galvanische Trennung zwischen den vorgenannten zwei Schaltkreisen. Ein am Steuerausgang SV anliegendes Steuersignal bedeutet somit eine Einspeisung der am Anschluss +24V A anliegenden elektrischen Energie in die gesteuerte Schaltung 1. Dies ist vorzugsweise dann der Fall, wenn das am Anschluss SE anliegende Signal eine über den Anschluss 2/24V fehlende Einspeisung elektrischer Energie darstellt und die der Prozessorsteuerung eingegebenen Sollzustands-Daten eine Versorgung der gesteuerten Schaltung 1 mit elektrischer Energie repräsentieren.

Alternativ ist die vorbeschriebene Schaltung mit drittem Optokoppler und zweitem Feldeffekttransistor in die Prozessorsteuerung integriert, sodass der Anschluss SV zu einem Anschluss wird, der unmittelbar mit der gesteuerten Schaltung 1, diesmal in Stromrichtung gesehen nach der einen Treiberstufe, gekoppelt ist. Es kann damit eine Regelung gemäß Figur 3 realisiert werden, allerdings mit erhöhter Betriebssicherheit.

Alternativ ist die vorbeschriebene Schaltung mit drittem Optokoppler und zweitem Feldeffekttransistor in die vorbeschriebene Koppelstufe integriert.

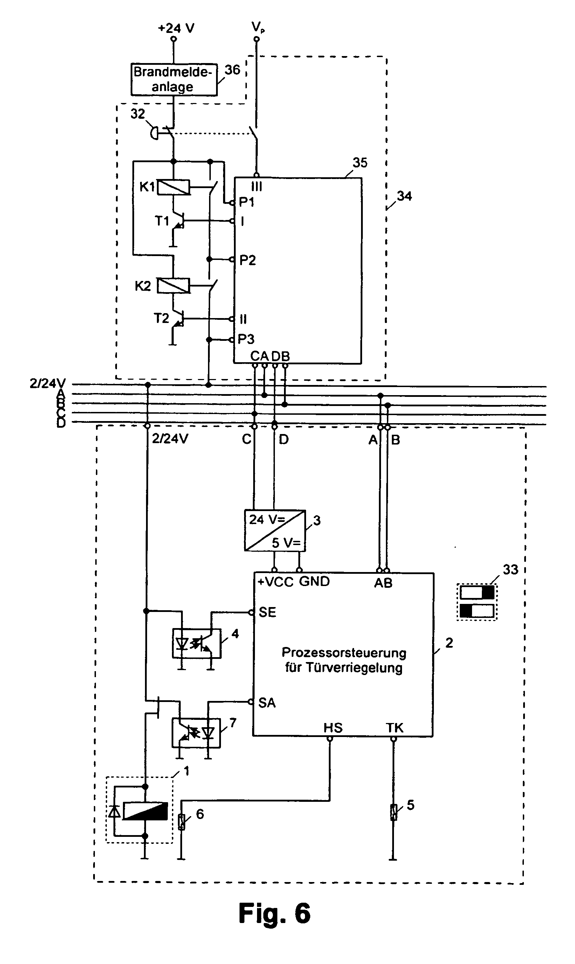

In Figur 6 ist eine Schaltung gezeigt, die neben einer Regelkreis-Schaltung gemäß einer fünften Ausführungsform der Erfindung eine übergeordnete Schaltung 34 zeigt, die beispielsweise als Fluchttürsteuerung vorzugsweise im Rahmen eines Türmanagement-Systems ausgebildet ist. Übergeordnet bedeutet, dass die Brandmeldeschaltung 34 den Regelkreis gemäß der fünften Ausführungsform der Erfindung ansteuert.

Wie zu erkennen, gibt es hier anstatt der vorhergehend beschriebenen drei Anschlüsse 1/A, 2/24V und 3/B vorzugsweise fünf Anschlüsse A - D, 2/24V. Die Datensignale für die Ansteuerschaltung 2 sind folglich nicht auf ein jeweiliges Spannungssignal aufmoduliert sondern werden der Ansteuerschaltung 2 über eigene, vorzugsweise mittels Leitungen realisierte Verbindungen übermittelt.

Die Schaltung 34 umfasst eine vorzugsweise als Mikroprozessor ausgebildete Ansteuerschaltung 35. Die Schaltung 34 ist eingerichtet, bei einem automatischen Erkennen eines beispielsweise Brandfalles oder aufgrund eines Betätigens eines Notaus-Schalters 32 im gezeigten Fall eine Abschaltung des elektrischen Verbrauchers 1 zu bewirken.

Dazu ist eine herkömmlich verfügbare Brandmeldeanlage 36 eingangsseitig mit einer vorzugsweise +24 V - Spannungsversorgung und ausgangsseitig mit dem Notaus-Schalter 32 gekoppelt. Diese Reihenfolge ist vorteilhaft, da die Brandmeldeanlage 36 somit auch mehrere Ansteuerschaltungen 34 bedienen kann. Dies ist insbesondere dann der Fall, wenn mehrere Türen eines Raumes gleichzeitig entriegelt werden müssen, um Fluchtwege frei zu machen.

Im gezeigten Beispiel ist die Brandmeldeanlage 36 nur für eine Ansteuerschaltung 34 zuständig. Der Notaus-Schalter 32 ist im gezeigten Beispiel mittels eines beispielsweise zweipoligen, vorzugsweise zwangsöffnenden Schalters gebildet, sodass gleichzeitig zwei Schaltkreise galvanisch voneinander getrennt geschaltet werden können.

Ein links in Figur 6 dargestelltes Schaltelement des Notaus-Schalters 32 ist vorzugsweise als Öffner ausgebildet. Bei Betätigen des Notaus-Schalters 32 wird somit ein Stromfluss von der Brandmeldeanlage 36 zu Elementen unterbrochen, die dem Öffner nachgeschaltet sind.

Ein rechts in Figur 6 dargestelltes Schaltelement des Notaus-Schalters 32 demgegenüber ist vorzugsweise als Schließer ausgebildet, der ausgangsseitig mit einem Prüfeingang III der Ansteuerschaltung 35 gekoppelt ist. Bei Betätigen des Notaus-Schalters 32 wird somit ein Stromfluss von einem Anschluss Vₚ für eine Prüfspannung zur Ansteuerschaltung 35 hergestellt.

Ein Anliegen einer Spannung am Prüfspannungsanschluss Vₚ bedeutet demnach für die Ansteuerschaltung 35 hinsichtlich des Prüfeingangs III, den bzw. die angeschlossenen elektrischen Verbraucher abzuschalten, also eine Energieversorgung zu dem(n) elektrischen Verbraucher(n) abzuschalten bzw. zu unterbrechen.

Basierend auf dem am Prüfeingang III anliegenden Signal erzeugt die Ansteuerschaltung 35 Daten für Ausgänge A, B, die ein Abschalten des elektrischen Verbrauchers repräsentieren.

Sind mittels der Brandmelde-Schaltung 34 mehrere elektrische Verbraucher anzusteuern, sind die erzeugten Daten zusätzlich vorzugsweise in Nachrichten mit einem Adresskopf verpackt, sodass eine jeweilige angeschlossene Ansteuerschaltung 2 ermitteln kann, ob die erzeugten Daten für sie bestimmt sind oder nicht.

Zusätzlich können Nachrichten mit vorbestimmten Sonderadressen vorgesehen sein, sodass die Ansteuerschaltung 35 in der Lage ist, alle angeschlossenen Ansteuerschaltungen 2 oder vordefinierte Gruppen angeschlossener Ansteuerschaltungen 2 gleichzeitig zu adressieren bzw. anzusprechen. Dies führt zu Vorteilen hinsichtlich der zeitlichen Reaktion der angeschlossenen Ansteuerschaltungen 2 sowie im Aufwand einer notwendigen Bus-Kommunikation zwischen Ansteuerschaltung 35 und angeschlossenen Ansteuerschaltungen 2.

Um die angeschlossenen Regelkreise einzeln oder in Gruppen ansprechen zu können, müssen ihnen Adressen vergeben werden. Im in Figur 6 gezeigten Beispiel ist eine Adresseinstellung 33 mittels zweier DIP-Schalter gebildet. Somit können nutzerseitig mittels Umstellens der DIP-Schalter diesem Regelkreis eine von vier möglichen Adressen vergeben werden, was dazu führt, dass die Schaltung mit bis zu vier Regelkreisen gekoppelt sein kann.

Alternativ verfügt der Regelkreis über einen vorzugsweise nicht-flüchtigen Adressspeicher, in dem eine jeweilige eindeutige Adresse für den Regelkreis abgelegt ist.

In dem Fall kann eine jeweilige Adresse auch zentral beispielsweise mittels einer angeschlossenen Schaltung, beispielsweise der Schaltung 34, vergeben werden. Im einfachsten Fall gibt es für diesen Fall eine spezielle Nachrichtenform.

Ausgangsseitig ist der Öffner des Notaus-Schalters 32 mit einem ersten Prüfeingang P1 der Ansteuerschaltung 35 gekoppelt. Basierend auf den an den Eingängen III, P1 anliegenden Signalen ermittelt die Ansteuerschaltung 35, ob eine erste Schaltstufe, gebildet mittels eines ersten Relais K1 und eines ersten Transistors T1, einzuschalten ist oder nicht. Bei Betätigen des Notaus-Schalters 32 beispielsweise würde am Eingang III ein Signal anliegen und am Prüfeingang P1 nicht, was zu einem Abschalten der ersten Schaltstufe führen würde. Das Abschalten erfolgt im gezeigten Fall mittels Ansteuerns des Transistors T1 über einen Steuerausgang I der Ansteuerschaltung 34.

Ein Schalter des ersten Relais K1 ist ausgangsseitig vorzugsweise mit einem zweiten Prüfeingang P2 der Ansteuerschaltung 35 gekoppelt. Die Ansteuerschaltung 35 ist somit in der Lage zu ermitteln, ob das Schalten der ersten Schaltstufe funktioniert hat oder nicht.

Aus Gründen der Sicherheit ist dem Schalter des ersten Relais K1 eine zweite Schaltstufe nachgeschaltet, die vorzugsweise ebenso gestaltet ist wie die erste Schaltstufe. Eine Prüfung eines korrekten Signals am Eingang P2 ist dabei Voraussetzung, dass die Ansteuerschaltung über einen Steuerausgang II einen zweiten Transistor T2 der zweiten Schaltstufe ansteuert. Ausgangsseitig ist ein Schalter eines zweiten Relais K2 der zweiten Schaltstufe mit einem dritten Prüfeingang P3 der Ansteuerschaltung 35 gekoppelt. Damit ist es der Ansteuerschaltung 35 möglich zu ermitteln, ob die zweite Schaltstufe korrekt geschaltet hat oder nicht.

Alternativ kann anstelle der Transistor-Relais-Schaltungen jeweils auch nur ein Schaltelement verwendet werden, das auch als Optokoppler ausgebildet sein kann und analog dem vorgehend beschriebenen ersten Optokoppler verschaltet ist. D. h. der Optokoppler der ersten Schaltstufe ist sendeteilseitig mit einem Eingang mit dem Steuerausgang I gekoppelt. Empfangsteilseitig ist dieser Optokoppler mit einem Eingang mit dem Öffner des Notaus-Schalters 32 und mit einem Ausgang mit dem Prüfeingang P2 der Ansteuerschaltung 2 gekoppelt. Der Optokoppler der zweiten Schaltstufe ist sendeteilseitig mit einem Eingang mit dem Steuerausgang II gekoppelt. Empfangsteilseitig ist dieser Optokoppler mit einem Eingang mit einem empfangsteilseitigen Ausgang des Optokopplers der ersten Schaltstufe und mit einem Ausgang mit dem Anschluss 2/24V vorzugsweise eines entsprechenden Busses gekoppelt.

Anstelle eines Schließers im Notaus-Schalter 32 kann auch ein Öffner ausgebildet sein, was dazu führt, dass die Ansteuerschaltung 35 in ihrer Logikverarbeitung umgestellt werden muss. Im einfachsten Fall wird das Signal am Eingang III einfach negiert.

Ausgangsseitig ist die zweite Schaltstufe mit dem Anschluss 2/24V einer jeweiligen gesteuerten Schaltung 1 gekoppelt.

Die Ansteuerschaltung 35 weist ferner Ausgänge C, D auf, auf denen die für die angeschlossene(n) Ansteuerschaltung(en) 2 erforderlichen Spannungssignale zur Verfügung gestellt werden.

Alternativ weist die Ansteuerschaltung 35 einen Modulator auf, der die Datensignale bzw. Nachrichten für die angeschlossene(n) Ansteuerschaltung(en) 2 auf die Spannungssignale aufmoduliert. In dem Fall weist die Ansteuerschaltung 34 anstelle der vier Anschlüsse A - D zwei Anschlüsse 1/A und 3/B gemäß den vorhergehend beschriebenen Regelkreisen auf.

Alternativ ist der Modulator getrennt von der Ansteuerschaltung 35 ausgebildet.

In Figur 6 ist schematisch eine Bus-Verschaltung zwischen Schaltung 34 einerseits und gesteuerter Schaltung 1 sowie Ansteuerschaltung 2 andererseits dargestellt.

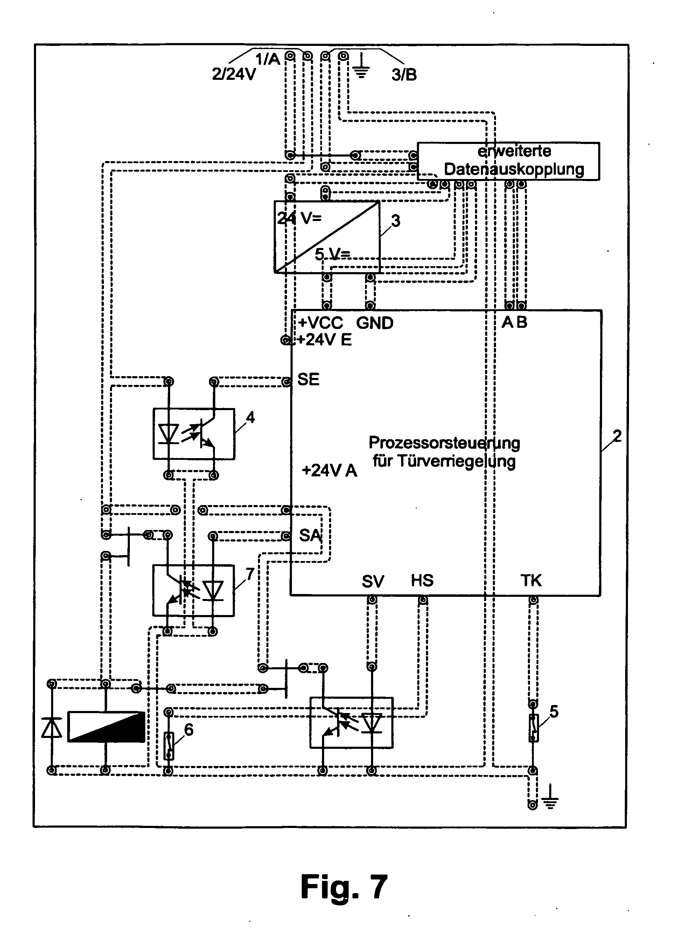

Figur 7 zeigt eine Regelkreis-Schaltung, die im Wesentlichen der Schaltung von Figur 3 entspricht. Allerdings umfasst sie zusätzlich die Verschaltung mit drittem Optokoppler und zweitem Feldeffekttransistor gemäß Figur 5. Alle elektrischen Bauteile sind auf einer Platine angeordnet, deren rückseitig ausgebildete Leiterbahnen schematisch gestrichelt dargestellt sind. Mit dem vorgestellten Platinenlayout sind alle vorherigen Schaltungen sowie Kombinationen von ihnen realisierbar.

Die Darstellung ist dahingehend schematisch, dass etwaig notwendige, zusätzliche elektrische Bauelemente, wie Kondensatoren, Widerstände und dergleichen, weggelassen sind und bei dem Platinenlayout zusätzlich zu berücksichtigen sind.

Auch wenn die gesteuerte Schaltung 1 bzw. der elektrische Verbraucher gemäß Figur 7 auf einer Platine angeordnet ist, können alternativ oder zusätzlich Anschlüsse beispielsweise in Form von Lötaugen oder eines Leitungsverbinders zum Anschließen bzw. Verlöten von Verbindungsleitungen oder Aufstecken eines anderen Leitungsverbinders vorgesehen sein, die zu einem jeweiligen elektrischen Verbraucher oder einer vorzugsweise als Modul ausgebildeten gesteuerten Schaltung geführt sind, die nicht auf der Platine angeordnet ist.

Damit sind die vorbeschriebenen Schaltungen in bestehende Vorrichtungen integrierbar, ohne dass großartige Veränderungen vorgenommen werden müssen.

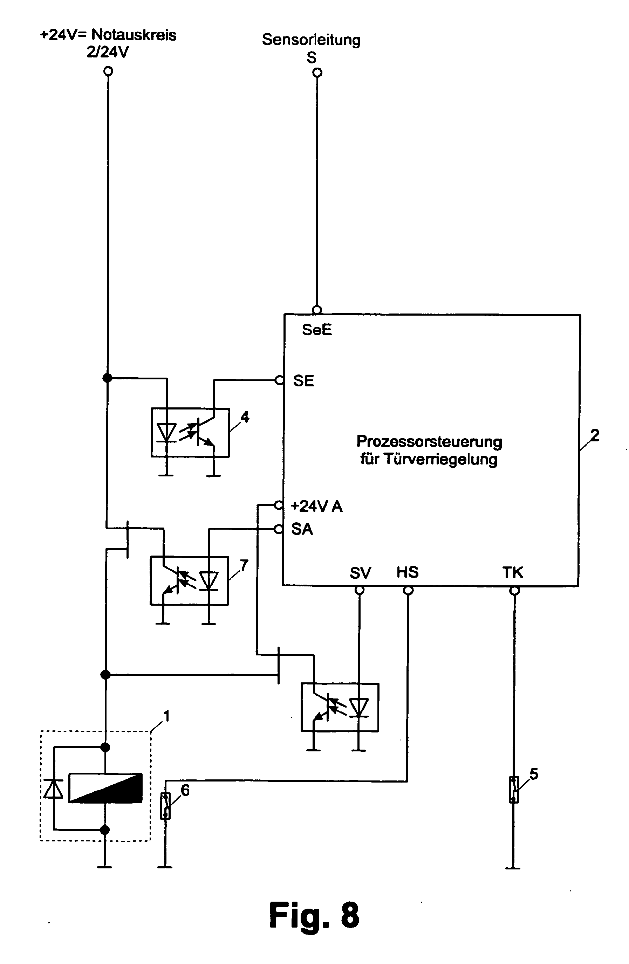

Figur 8 zeigt einen Regelkreis-Schaltplan gemäß einer sechsten Ausführungsform der Erfindung. Dieser Regelkreis unterscheidet sich von den vorherigen Regelkreisen dadurch, dass die Prozessorsteuerung zumindest einen zusätzlichen Sensorsignaleingang SeE aufweist, an den eine Sensorleitung S beispielsweise eines nicht dargestellten Rauchmelders angeschlossen ist. Dadurch ist es möglich, an die Prozessorsteuerung nur für diese zuständige Sensoren anzuschließen, ohne dass sie andere Türöffner bzw. Regelkreise beeinflussen könnten. Der Sensorsignaleingang SeE hat somit eine ähnliche Funktion wie der Türkontakt-Eingang TK

Alternativ ist der Sensorsignaleingang SeE mittels eines der vorstehend angegebenen Dateneingänge A, B gebildet. Dadurch können standardisierte Prozessorsteuerungen sowohl für Bus- als auch für buslosen Betrieb bereitgestellt werden.

Wiederum alternativ weist die Prozessorsteuerung sowohl den zumindest einen Sensorsignaleingang SeE als auch die vorstehend angegebenen Dateneingänge A, B auf. Dadurch kann die Prozessorsteuerung sowohl mit einem Bus, um beispielsweise zentral gesteuert zu werden, als auch mit somit lokalen Sensoren versehen werden.

Dies ermöglicht als Beispiel die Realisierung einer doppelflügeligen Fluchtweg-Drehflügeltür, bei der jeder Türflügel mit einer jeweiligen Verriegelung versehen ist und üblicherweise in Schließstellung verriegelt ist. Die standflügelseitige Verriegelung wird mittels eines Regelkreises gemäß einer der vorgenannten Ausführungsformen betrieben. Die gangflügelseitige Verriegelung wird mittels eines Regelkreises gemäß der zuletzt angegebenen Variante, d. h. mit zumindest einem Sensorsignaleingang SeE und Dateneingängen A, B, betrieben. Die Dateneingänge A, B beider Regelkreise sind exemplarisch über einen gemeinsamen Bus an einer Brandmeldezentrale angeschlossen, wie in Figur 6 gezeigt. Ein Signalsensoreingang SeE des gangflügelseitigen Regelkreises ist beispielsweise mit einem Schlüsselschalter gekoppelt. D. h. der Gangflügel verfügt beispielhaft über ein Türschloss, an dem eine Schlüsselbetätigung registriert wird. Diese Schlüsselbetätigung resultiert in einem Signal am Sensorsignaleingang SeE und wird im Normalbetrieb vom gangflügelseitigen Regelkreis interpretiert, die angeschlossene gangflügelseitige Verriegelung zu lösen.

Der Standflügel bleibt weiterhin verriegelt. Signalisiert allerdings die Brandmeldezentrale einen Notfall, in dem beide Türflügel entriegelt sein müssen, wird dies über die Dateneingänge A, B beiden Regelkreisen eingegeben, sodass sie ihre zugeordneten Verriegelungen lösen können, indem sie beispielsweise deren Spannungszufuhr abschalten, wie es typischerweise bei Fluchtwegtüren der Fall ist.

D. h. durch das Vorsehen sowohl lokal als auch (über einen Bus) gemeinsam ansteuerbarer Daten- bzw. Signaleingänge an der jeweiligen Prozessorsteuerung ist eine Vielzahl an Betriebsszenarien realisierbar, obwohl der Aufbau der Regelkreise im Wesentlichen gleich bleibt. Dadurch sind standardisierte Regelkreise verwendbar, was Kosten senken hilft.

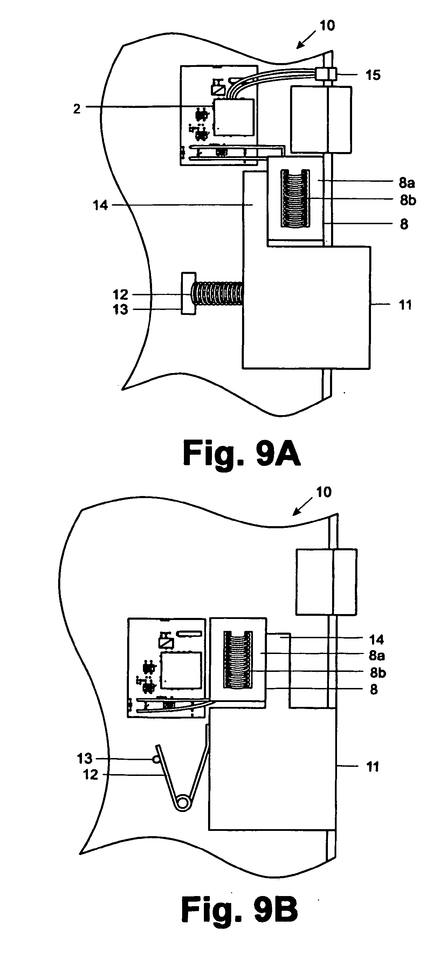

Figur 9A zeigt ausschnittsweise ein Türschloss 10, das mit einer der vorigen Ansteuerschaltungen 2 oder einer Kombination von ihnen versehen ist, die vorzugsweise auf einer Platine angeordnet ist. Das Türschloss 10 umfasst einen Riegel 11, der mittels einer Feder 12 in Richtung Öffnungsrichtung gezogen wird. Die Feder 12 ist einerends an einem Anschlag 13 und anderenends am Riegel 11 abgestützt bzw. angebracht.

Ein als Elektromagnet 8 ausgebildeter elektrischer Verbraucher, der vorzugsweise gemäß einem Ruhestromprinzip betrieben wird, zieht den Riegel 11 in eine Geschlossen-Stellung, in der der Riegel 11 ausgefahren ist, also aus dem Türschloss 10 von dessen in Figur 9A nach rechts weisender Stirnfläche hervorsteht.

Der Elektromagnet 8 besteht im Wesentlichen aus einer Elektrospule 8b und vorzugsweise einem magnetisierbaren Rückschlusskörper 8a.

Der Riegel 11 weist vorzugsweise einen Anschlagabschnitt 14 auf, mit dem der Elektromagnet 8 in Wechselwirkung tritt. Zumindest der Anschlagabschnitt 14 ist aus einem magnetisierbaren Material gebildet und bildet somit einen Magnetanker.

Bei Ausfall der Zufuhr elektrischer Energie würde der Riegel 11 aufgrund der Zugfeder 12 in das Türschloss 10 hinein gezogen und damit das Türschloss 10 freigegeben. Ist die Ansteuerschaltung 2, wie vorstehend beschrieben, eingerichtet, den Elektromagneten 8 auch bei Ausfall der eigentlichen Energieversorgung mit elektrischer Energie zu versorgen, ist weiterhin ein normaler Betrieb möglich. Ist die Ansteuerschaltung 2 zudem ausgangsseitig mit einem Anzeigeelement, beispielsweise einer LED, gekoppelt, kann dieser Zustand optisch oder auch akustisch angezeigt werden, sodass eine Reparatur durchgeführt werden kann.

Ist die gesamte Schaltung an einen Gebäudebus, wie beispielsweise einen LON-Bus bzw. vorzugsweise IP-basierten LAN-Bus, angeschlossen, ist die Prozessorsteuerung vorzugsweise eingerichtet, eine Fehlernachricht an eine Zentrale oder andere, über den Gebäudebus erreichbare Stellen eine Fehlernachricht abzusetzen und ggf. eine Bestätigung abzuwarten.

Damit der Riegel 11 in Offenstellung eines zugehörigen, nicht dargestellten Türflügels nicht ausgefahren wird, also der Elektromagnet 8 bestromt wird, kann ein beispielsweise mittels einer Steuerfalle gebildeter Auslöseschalters 15 (oder der vorhergehend beschriebene Türkontakt- oder Stößelschalter 5) vorgesehen sein, der mit zumindest einem zusätzlichen Steuereingang (oder dem Steuereingang TK) der Prozessorsteuerung gekoppelt ist. Steht der Auslöseschalter 15 in Figur 9A rechts aus dem Türschloss 10 hervor, bedeutet dies, dass der zugehörige Türflügel geöffnet ist. In dem Fall unterbindet die Prozessorsteuerung bzw. die Ansteuerschaltung 2 die Energieversorgung des Elektromagneten 8, sodass der Riegel aufgrund der Zugfeder 12 eingezogen bleibt.

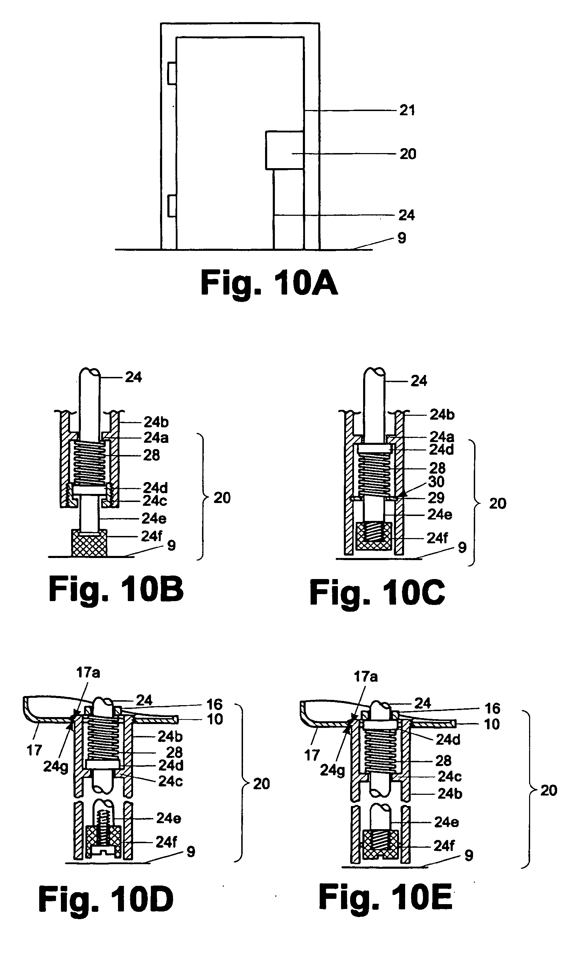

Wird ein in Figur 10A gezeigter Türflügel 21 geschlossen, kommt der Auslöseschalter 15 mit einem zugehörigen, nicht dargestellten Schließblech in Kontakt und wird dabei in einen Innenraum des Türschlosses 10 hinein gedrängt. Dies wird von der Ansteuerschaltung 2 erkannt, und sie schaltet die Energieversorgung für den Elektromagneten 8 frei.

Figur 9B zeigt ein Türschloss 10, das im Gegensatz zu dem in Figur 9A gezeigten Türschloss 10 so ausgebildet ist, dass der Riegel 11 beim Bestromen des Elektromagneten 8 in Öffnungsstellung gezogen wird. Ein hier beispielhaft als Schenkelfeder ausgebildetes Federelement 12 wirkt in Riegel-Schließstellung. D. h. bei inaktivem Elektromagneten 8 wird der Riegel 11 mittels der Feder 12 in Schließstellung gedrückt bzw. gedrängt. Die Feder 12 ist mit einem dem Riegel 12 abgewandten Schenkel an dem Federanschlag 13 abgestützt.

Bei solch einem Türschloss 10 ist im Rahmen der Erfindung ein Auslöseschalter 15 bzw. ein Türkontakt- oder Stößelschalter 5 entbehrlich, da das Türschloss 10 im Normalbetrieb entriegelt ist.

In Figur 10A ist eine Feststellvorrichtung 20 gemäß einer Ausführungsform der Erfindung dargestellt. Bei einem hierin dargestellten Türflügel 21 handelt es sich beispielsweise um eine Tür, die im Normalfall in vorzugsweise einer Geschlossen-Stellung festgestellt ist, wohingegen in einem Brandoder Gefahrenfall die Feststellung aufgehoben werden muss. Die Feststellvorrichtung 20 ist vorzugsweise so in die Tür 21 eingebaut, dass sie von außen nicht sichtbar ist. Grundsätzlich ist es jedoch auch möglich, die Feststellvorrichtung 20 außen auf dem Türflügel 21 bzw. einem Türblatt vorzusehen.

Die Feststellvorrichtung 20 umfasst vorzugsweise eine Schubstange 24, die sich vorzugsweise in Richtung Boden 9 hin erstreckend ausgebildet ist. Im Falle eines Feststellens des Türflügels 21 wird die Schubstange 24 von der Feststellvorrichtung weg bis zu einer Feststellposition in Richtung Boden 9 bewegt. Im Falle eines Entriegelns hingegen wird die Schubstange 24 vom Boden 9 in Richtung Feststellvorrichtung 20 bewegt.

Anstelle in Richtung Boden 9 kann eine Feststellung alternativ oder zusätzlich in Richtung einer nicht dargestellten Decke oder Zarge erfolgen.

In Abhängigkeit davon, ob der Türflügel 21 in einer bestimmten Öffnungsstellung, beispielsweise ganz geöffnet oder in einer beliebigen, anderen Stellung festgelegt werden soll, ist das untere Ende der Schubstange 24 entsprechend ausgebildet.

Vorzugsweise ist die Schubstange 24 im zugehörigen Türflügel 21 aufgenommen. Dies kann beispielsweise mittels einer Ausnehmung erfolgen, die vorzugsweise an einer Stirnseite des jeweiligen Türflügels 21 ausgebildet ist, wobei die Stirnseite die Seite des Türflügels 21 bezeichnet, die in Geschlossen-Stellung des Türflügels 21 einem zugehörigen Schließblech zugewandt ist. In der Ausnehmung kann eine nicht dargestellte Hülse eingesetzt sein. Dadurch ist eine nahezu unsichtbare Unterbringung der Schubstange 24 möglich.

Gemäß einer in Figur 10B gezeigten Feststellvorrichtung 20 gemäß einer ersten Ausführungsform der Erfindung ist die Schubstange 24 ausgebildet, mit dem Boden 9 verklemmt zu werden. D. h. es sind im Boden 9 keine zusätzlichen Vorkehrungen oder Einrichtungen vorzusehen. Damit ist die Feststellvorrichtung 20 universell, d. h. an praktisch jeder Tür, einsetzbar.

Die Feststellvorrichtung 20 umfasst einen Klemmblock 24f, der bei einem Türfeststellen mit dem Boden 9 verklemmt wird. Der Klemmblock 24f besteht vorzugsweise aus einem elastischen Kunststoff gebildet und ist vorzugsweise als Gummistopper ausgebildet. Der Klemmblock 24f ist an einem unteren Endabschnitt 24e der Schubstange 24 beispielsweise mittels Formschlusses befestigt.

Die Schubstange 24 ist vorzugsweise oberhalb des Klemmblocks 24f in einer Hülse 24b frei verschiebbar aufgenommen. Die Hülse 24b erstreckt sich vorzugsweise bis zu einem zugehörigen, nicht dargestellten Türschloss.

Die Schubstange 24 umfasst einen Federanschlag vorzugsweise in Form eines Kragens 24d, an dem eine Feder 28 mit einem dem Türschloss abgewandten Ende abgestützt ist. An einem dem Kragen 24d gegenüberliegenden Ende ist die Feder 28 an einem Ringabschnitt 24a der Hülse 24b abgestützt. Der Ringabschnitt 24a erstreckt sich von Innenseiten der Hülse 24b in eine Richtung quer zu einer Längserstreckung der Hülse 24b in Richtung Hülseninnenraum. Der Kragen 24d ist an einer dem Türschloss 10 abgewandten Seite an einem in bzw. an der Hülse 24b ausgebildeten bzw. angeordneten, zweiten Ringabschnitt 24c abgestützt.

Wie in Figur 10B zu erkennen, liegt der Kragen 24d im gezeigten Beispiel im Verklemm-Zustand des Klemmblocks 24f mit dem Boden 9 nicht auf dem zweiten Ringabschnitt 24c auf. Der zweite Ringabschnitt 24c dient lediglich Herausfallen der Schubstange 24 vorzubeugen. Hinsichtlich der Funktionsweise der Feststellvorrichtung 20 kann der zweite Ringabschnitt 24c somit auch entfallen.

Im gezeigten Beispiel ist der zweite Ringabschnitt 24c ein hülsenförmiges Teil mit einem Außengewinde. Die Hülse 24b weist an einem unteren, vorzugsweise Endabschnitt einen Innengewindeabschnitt auf, der komplementär zum Außengewinde des Ringabschnitts 24c ausgebildet ist. Diese Art von Ringabschnitt 24c erlaubt eine von außen unsichtbare Montage des Ringabschnitts 24c. Zudem ist eine Anpassung an die jeweils eingesetzte Feder 28 möglich.

Es handelt sich insgesamt um eine Feststellvorrichtung 20, die eingerichtet ist, sich ohne äußere Krafteinflüsse mit dem Boden 9 zu verklemmen und damit bei Türen Verwendung zu finden, die im Notfall beispielsweise geschlossen gehalten werden müssen.

Die Hülse 24b kann jede gewünschte Querschnittsform haben. Das einzige Kriterium ist, dass die Schubstange 24 in der Hülse 24b frei verschiebbar gelagert aufgenommen ist und entsprechende Federanschläge ausgebildet sind.

Eine in Figur 10C gezeigte Feststellvorrichtung 20 gemäß einer zweiten Ausführungsform der Erfindung ist eingerichtet, ohne äußere Krafteinflüsse eine Verklemmung mit dem Boden 9 aufzuheben und damit bei Türen Verwendung zu finden, die in vorbestimmten Fällen entriegelt sein müssen.

Die Feder 28 ist mit einem dem Türschloss zugewandten Ende an dem Kragen 24d abgestützt. An ihrem anderen Ende ist die Feder 28 im gezeigten Beispiel anstelle an einem Ringabschnitt 24c an einer Ringscheibe 29, beispielsweise in Form einer Unterlegscheibe oder eines Sprengrings, abgestützt. Die Ringscheibe 29 ist in eine Nut 30 eingesetzt, die in der Hülse 24b in Bezug auf deren Innenseite vorzugsweise umlaufend ausgebildet ist. Die Ringscheibe 29 vereinfacht das Einsetzen der Schubstange 24 mit der Feder 28. Die Ringscheibe 29 entspricht funktional dem Ringabschnitt 24c in Figur 10B.

Der Ringabschnitt 24a ist vorgesehen, damit sich die Schubstange 24 nicht zu weit nach oben in Figur 10B bewegen kann. Allerdings kann der Ringabschnitt 24a auch entfallen.

Die Hülse 24b erstreckt sich über den unteren Federanschlag hinaus mindestens bis zu einem unteren Rand des Klemmblocks 24f, wenn sich dieser in Entriegelungsstellung befindet. Sie kann sich aber auch etwas weiter in Richtung Boden 9 erstrecken, endet aber oberhalb des Bodens 9, wie in Figur 10C gezeigt. Die längere Ausführung der Hülse 24b ermöglicht ein optisches Verstecken der Feststellvorrichtung 20. Ferner kann die Hülse 24b, wenn sie beispielsweise aufgrund ihres Materials stabil genug ausgebildet ist, einen mechanischen Schutz der verschiebbaren Teile der Feststellvorrichtung 20 bieten.

Der Klemmblock 24f ist im gezeigten Beispiel auf den unteren Endabschnitt 24e der Schubstange 24 geschraubt und weist vorteilhafterweise eine kreisrunde Querschnittsform auf.

In Figur 10D ist eine Feststellvorrichtung 20 gemäß einer dritten Ausführungsform der Erfindung dargestellt. Im Gegensatz zu den vorigen zwei Ausführungsformen ist hier der Federmechanismus in Verbindung mit einem Türschloss 10 realisiert. Die Funktion des Federanschlags 24a gemäß Figur 10A wird von einem im Türschloss 10 ausgebildeten Anschlag 16 übernommen. D. h. die Hülse 24b weist nunmehr nur noch einen Federanschlag auf, der im gezeigten Beispiel mittels des Ringabschnitts 24c gebildet ist. Die Hülse 24b ist vorzugsweise so ausgebildet, dass sie direkt am Türschloss 10 bzw. an einer unteren Gehäusewand 17 des Türschlosses 10 vorzugsweise mittels eines oberen Gewindeabschnitts 24g in einen komplementär ausgebildeten Gewindeabschnitt 17a eingeschraubt ist. Solch eine Verschraubung bildet in Verbindung mit der Feder 28 zudem die Möglichkeit einer Einstellung an die Feder 28.

Der Klemmblock 24f ist im gezeigten Beispiel mittels einer Schraube in den unteren Endabschnitt 24e der Schubstange 24 geschraubt.

Die Feststellvorrichtung 20 gleicht in ihrer Wirkung der vorbeschriebenen Feststellvorrichtung 20 gemäß der ersten Ausführungsform der Erfindung.

In Figur 10E ist eine Feststellvorrichtung 20 gemäß einer vierten Ausführungsform der Erfindung dargestellt. Der einzige, funktionsbedingte konstruktive Unterschied zur dritten Ausführungsform der Erfindung besteht in der Ausbildung des Kragens 24d. Er ist wie bei der zweiten Ausführungsform der Erfindung so ausgebildet, dass die Feder 28 am dem Türschloss 10 zugewandten Ende an eben jenem Kragen 24d abgestützt ist.

Damit gleicht diese Feststellvorrichtung 20 in ihrer Wirkung der vorbeschriebenen Feststellvorrichtung 20 gemäß der zweiten Ausführungsform der Erfindung.

Der Klemmblock 24f ist ähnlich Figur 10C ausgebildet. Zusätzlich weist der Klemmblock 24f beispielsweise einen Schlitz auf, sodass der Klemmblock 24f mittels eines Schraubendrehers auf den unteren Endabschnitt 24e der Schubstange 24 geschraubt werden kann. Es ist selbstverständlich jede andere Schraubenkopfform möglich, wie beispielsweise eine Kreuzschlitz-, Inbus-, Torx- oder Außensechskantform. Zudem ist der Klemmblock 24f in der Hülse 24b mittels einer angedeuteten Kugellagerung geführt gelagert aufgenommen.

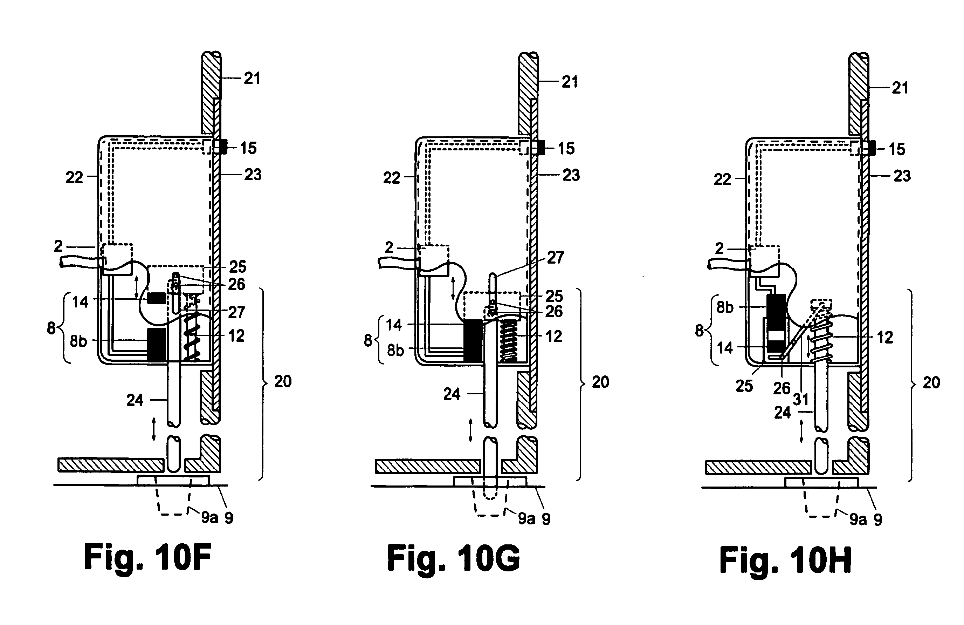

In Figur 10F ist eine Feststellvorrichtung 20 gemäß einer fünften Ausführungsform der Erfindung dargestellt. Sie gleicht in ihrer Wirkung der in Figur 10B gezeigten Feststellvorrichtung 20 gemäß der zweiten Ausführungsform der Erfindung. Der Federmechanismus ist komplett in einem Gehäuse 22 realisiert bzw. untergebracht. D. h. an der Schubstange 24 sind keine Vorkehrungen zum Abstützen einer Feder erforderlich.

Figur 10F zeigt die Feststellvorrichtung 20 in einer Entriegelungsstellung.

Das Gehäuse 22 ist vorzugsweise ähnlich einem üblichen Schlosskasten gestaltet. Alternativ kann es ein Gehäuse eines Türschlosses 10 sein.

Bei der hier gezeigten Ausführungsform ist das Gehäuse 22 in eine in einem Türflügel 21 vorgesehene Ausnehmung eingesetzt. Es ist mit einer Frontplatte 23 versehen, über welche das Gehäuse 22 an dem Türflügel 21 mittels Schrauben oder dergleichen befestigt ist. Die Schubstange 24 ragt aus dem Gehäuse 22 vorzugsweise nach unten, d. h. in Richtung Boden 9, heraus und dient einem Feststellen bzw. Freigeben des Türflügels 21.

Die Schubstange 24 steht mit einem unteren Ende je nach ihrer augenblicklichen Stellung mehr oder weniger weit über einen unteren Rand des Türflügels 21 vor. An ihrem oberen Ende reicht die Schubstange 24 in das Gehäuse 22 hinein und ist dort mit einem Führungselement 25 versehen.

Das Führungselement 25 ist zur exakten, im gezeigten Fall vertikalen Führung vorzugsweise mit zwei vertikal übereinander angeordneten Zapfen 26 versehen.

Die Zapfen 26 sind in einem vertikal verlaufenden, im Gehäuse 22 ausgebildeten Gehäuseschlitz 27 geführt. Die Zapfen 26 dienen vorzugsweise zugleich als oberer und unterer Anschlag für die Bewegung des Führungselementes 25 in dem Gehäuseschlitz 27. Dadurch ist sichergestellt, dass sich die Schubstange 24 nur innerhalb eines zulässigen Bereichs bewegen kann.

Der Gehäuseschlitz 27 kann selbstverständlich auch an einer gegenüberliegenden, in Figur 10E hinteren Gehäusewand ausgebildet sein.

Anstelle des Gehäuseschlitzes 27 kann alternativ an einer Innenseite einer zugehörigen, in Figur 10E beispielsweise vorderen Gehäusewand, eine nutenartige Ausnehmung ausgebildet sein, die sich ähnlich wie der Gehäuseschlitz 27 erstreckt, und in die die Zapfen 26 eingreifen. Somit sind die Zapfen 26 und die Ausnehmung von außen nicht sichtbar, wodurch an dieser Stelle des Gehäuses zudem kein Schmutz in ein Inneres des Gehäuses gelangen kann.

Alternativ kann das Führungselement 25 mittels eines vertikalen Schlitzes oder einer vertikalen nutenartigen Ausnehmung gebildet sein, in den bzw. die zwei nunmehr an der Innenseite besagter Gehäusewand angeordnete Zapfen eingreifen, die in Richtung Schlitz weisen und in diesen eingreifen.

Zwischen vorzugsweise einer unteren Innenseite des Gehäuses 22 und einer Unterseite des Führungselementes 25 ist ein vorzugsweise als Schraubenfeder ausgebildetes Federelement 12 angeordnet, welches das Führungselement 25 und somit gleichzeitig die Schubstange 24 nach oben drückt, sodass der Türflügel 21 freigegeben werden kann. Anstelle der Innenseite kann das Federelement 12 auch an einem im Innenraum des Gehäuses 22 angeordneten Anschlag abgestützt sein.

Alternativ ist solch ein Anschlag mittels eines Kragens 24d gemäß Figur 10B gebildet. Dies ist insbesondere dann sinnvoll, wenn das Federelement 12 ansonsten zu lang würde und dadurch die Betriebssicherheit beeinträchtigt wäre.

Vorzugsweise umgreift das Federelement 12 die Schubstange 24, was eine rationelle Ausnutzung vorhandenen Raums bedeutet. Alternativ kann das Federelement 12, wie in Figur 10F gezeigt, seitlich der Schubstange 24 angeordnet sein.

Zwischen dem Gehäuse 22 und dem Führungselement 25 ist weiterhin ein als Elektromagnet 8 ausgebildeter Verbraucher angeordnet, der im Wesentlichen aus einem an vorzugsweise der Unterseite des Führungselementes 25 befestigten Magnetanker 14 und einer vorzugsweise an der unteren Innenseite des Gehäuses 22 angeordneten Elektrospule 8b besteht, die dem Magnetanker 14 gegenüberliegend angeordnet ist.

Die Elektrospule 8b ist mit einer der vorbeschriebenen Ansteuerschaltungen 2 gekoppelt. Vorzugsweise die Ansteuerschaltung 2 ist mit einem Auslöseschalter 15, beispielsweise in Form eines Druckschalters oder Tasters, gekoppelt. Bei der hier gezeigten Ausführungsform ist der Auslöseschalter 15 in der Frontplatte 23 des Gehäuses 22 gelagert und kann von außen leicht betätigt werden. Der Auslöseschalter 15 wird im gezeigten Beispiel mittels einer Steuerfalle betätigt oder ist ein Teil besagter Steuerfalle.

Alternativ kann der Auslöseschalter 15 auch an einer nahe gelegenen Wand oder an einer anderen Stelle der Tür 21 angeordnet sein. Auch eine Fernauslösung, beispielsweise von einer zentralen Überwachungsstelle aus, ist möglich.

In Figur 10F ist eine Feststellvorrichtung 20 dargestellt, bei der ein Türflügel 21 nur in bestimmten Stellungen festgelegt werden kann. Dazu sind im Boden 9 an bestimmten Stellen Bodenmulden 9a vorgesehen. Bei einem Feststellen des Türflügels 21 taucht das untere Ende der Schubstange 24 in eine jeweilige Bodenmulde 9a ein. Zusätzlich kann vorgesehen sein, dass die Schubstange 24 beim Feststellen so weit nach unten bewegt wird, dass sie sich mit der jeweiligen Bodenmulde 9a verklemmt oder formschlüssig mit einer jeweiligen Bodenmulde 9a in Eingriff gelangt.

Wird die Feststellung beispielsweise mittels des Auslöseschalters 15 ausgelöst, wird im Normalbetrieb der Magnetanker 14 von der Elektrospule 8b angezogen, und gleichzeitig werden das Führungselement 25 und somit die Schubstange 24 gegen die Kraft des Federelementes 12 nach unten bewegt, sodass die Schubstange 24 in eine Bodenmulde 9a eingreift. Damit ist der Türflügel 21 festgestellt, wie in Figur 10G gezeigt.

Um den Türflügel 21 in einem Brand- oder Gefahrenfall freizugeben, wird die Energieversorgung der Elektrospule 8b unterbrochen, beispielsweise automatisch durch einen Rauchmelder oder manuell durch Betätigung des Auslöseschalters 15. Nach Wegfall der Haltekraft der Elektrospule 8b drückt das Federelement 12 das Führungselement 25 und damit die Schubstange 24 nach oben, sodass das untere Ende der Schubstange 24 nicht mehr mit dem Fußboden 9 in Verbindung steht. Nun kann der Türflügel 21 beispielsweise mittels eines Türschließers geschlossen werden.

In Figur 10H ist eine Feststellvorrichtung 20 gemäß einer sechsten Ausführungsform der Erfindung dargestellt. Sie gleicht in ihrer Wirkung der in Figur 10C gezeigten Feststellvorrichtung 20 gemäß der dritten Ausführungsform der Erfindung.

Anstelle eines Führungsteils 25 ist die Schubstange 24 über einen Hebel 31 an einem im Wesentlichen U-förmigen Ankerteil 25 angelenkt. Der Magnetanker 14 ist hier unterhalb der Elektrospule 8b angeordnet und in dem U-förmigen Ankerteil 25 aufgenommen oder einstückig mit ihm ausgebildet.

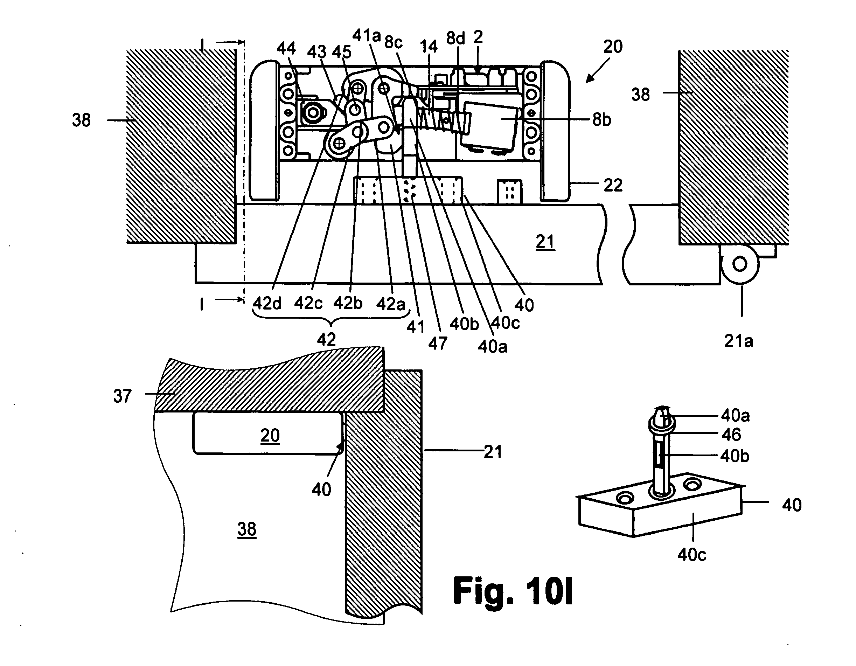

Figur 10l zeigt eine Türverriegelung bzw. Tür-Feststellvorrichtung 20 gemäß einer siebten Ausführungsform der Erfindung. Im Gegensatz zu den vorherigen Ausführungsformen ist die nun beschriebene Feststellvorrichtung 20 nicht in einem Türschloss integriert sondern bevorzugt separat ausgebildet. Sie ist vorteilhafterweise unterhalb eines Türsturzes 37 angebracht, wie unten links in Figur 10I dargestellt. Sie wirkt mit einem Verriegelungsbolzen 40 zusammen, der seinerseits am zu verriegelnden Türflügel 21 ortsfest angebracht ist. Im gezeigten Beispiel handelt es sich um einen als Drehflügel ausgebildeten Türflügel 21.

Der oben in Figur 10I dargestellte Türflügel 21 stellt klar, dass er an seiner in Figur 10I rechten Seite mittels Beschlägen 21 a beispielsweise an einer Wand 38 angeschlagen ist und mit dem linken Ende nach unten in Figur 10I in Öffnungsrichtung verschwenkt wird.

Der Verriegelungsbolzen 40 umfasst hauptsächlich einen Verriegelungsabschnitt 40a, mit dem der Verriegelungsbolzen 40 verriegelt werden kann. Der Verriegelungsabschnitt 40a weist dazu eine einseitige Arretierungsausnehmung oder eine in Figur 10I dargestellte, durchgehende Arretierungsöffnung 40b auf.

Der Verriegelungsabschnitt 40a ist vorzugsweise drehgelenkig und/oder mittels einer Feder 47 gefedert in einem Anbringabschnitt 40c untergebracht. Dies ist insbesondere bei Drehflügeltüren günstig, bei denen der Verriegelungsabschnitt 40a eine Kreisbahnbewegung vollzieht und damit nicht exakt translatorisch auf einen Verriegelungshaken 41 der Türverriegelung zu und wieder weg bewegt wird. Damit ist ein einfacher und doch sehr wirksamer Toleranzausgleich für den Verriegelungsbolzen 40a geschaffen.

Im Gehäuse 22 der Tür-Feststellvorrichtung 20 ist zunächst der Verriegelungshaken 41 links drehgelenkig angebracht. D. h. ein in Figur 10I rechter Hakenabschnitt 41 a des Verriegelungshakens 41 kann aus dem Bereich des Verriegelungsbolzens 40 bzw. dessen Arretierungsöffnung 40b heraus oder in diesen hinein verschwenkt werden.

Eine rechte untere Anlaufschräge des Hakenabschnitts 41a ermöglicht dem Verriegelungsbolzen 40 das Überfahren des Hakenabschnitts 41a.

Linksseitig des Hakenabschnitts 41 a in Figur 10I ist ein erster Kniehebel 42a eines Kniehebelgelenks 42 drehgelenkig angebracht. An dem ersten Kniehebel 42a sind an einem dem Verriegelungshaken 41 abgewandten Ende zwei andere Kniehebel 42b, 42c wiederum drehgelenkig angebracht. Der in Figur 10I links unten angesetzte, nunmehr dritte Kniehebel 42c ist an einem dem ersten Kniehebel 42a entfernten Ende auf einer Achse frei rotierbar aufgenommen, die ihrerseits in dem Gehäuse 22 ortsfest aufgenommen ist. Der in Figur 10I links oben angesetzte, zweite Kniehebel 42b ist an einem dem ersten Kniehebel 42a entfernten Ende an einer Anlenkachse 45 sowohl mit einem Magnetanker 14 der Feststellvorrichtung 20 als auch mit einem vierten Kniehebel 42d drehgelenkig gekuppelt. Der vierte Kniehebel 40d ist an seinem dem zweiten Kniehebel 42b entfernten Ende wiederum auf einer Achse frei rotierbar aufgenommen, die ihrerseits in dem Gehäuse 22 ortsfest aufgenommen ist.

Die Anlenkachse 45 ist in einer Führungsbahn 43 entlang eines durch sie definierten Wegs zwangsgeführt und bewegbar aufgenommen.

Ferner weist die Feststellvorrichtung 20 vorzugsweise ferner eine Anschlagplatte 44 auf, die an einer der Magnetspule 8b entfernten Seite des Magnetankers 14 angeordnet ist. Die Anschlagplatte 44 dient als Anschlag für die Anlenkachse 45 in ihrer Bewegungsrichtung auf die Magnetspule 8b zu. Dazu weist die Anschlagplatte 44 an einem dem Magnetanker 8b zugewandten Ende einen hakenförmigen Vorsprung auf.

Der Magnetanker 14 erstreckt sich vom Anlenkpunkt an den Kniehebeln 40b, 40d an dem Verriegelungshaken 41 (und selbstverständlich auch an dem Verriegelungsbolzen 40) vorbei in Richtung nach rechts abwärts in Figur 10I, und zwar in Richtung Magnetspule 8b. Die Magnetspule 8b ist ortsfest im Gehäuse 22 aufgenommen bzw. an diesem befestigt und ist so ausgerichtet, dass der Magnetanker 14 translatorisch auf die Magnetspule 8b zu- und von ihr weg bewegbar ist.

Die Anlenkachse 45 kommt bei einer Bewegung auf die Magnetspule 8b mit einer der Anlenkachse 45 zugewandten und der Magnetspule 8b abgewandten Innenfläche des hakenförmigen Vorsprungs der Anschlagplatte 45 vorzugsweise in Anlage, um zu verhindern, dass sich der Magnetanker 14 zu weit in Richtung Magnetspule 8b bewegt.

Das Bewegungsmaß des Magnetankers 14 ist aufgrund der Kniehebelanordnung 42 relativ gering, reicht aber aus, den Magnetanker 14 aus dem Wirkungsbereich der Magnetspule 8b zu bringen. Vorzugsweise weist der Magnetanker 14 einen Federanschlag 8c in Form eines umlaufend ausgebildeten Kranzes auf, auf den von einem der Magnetspule 14 zugewandten Ende her eine Rückstellfeder 8d beispielsweise in Form einer Schraubenfeder aufgesetzt ist, die somit einerends auf dem Federanschlag 8c und anderenends an einer dem Magnetanker 14 zugewandten Seite der Magnetspule 8b vorgespannt abgestützt ist.

Fällt die Stromversorgung der Magnetspule 8b aus, drückt die Rückstellfeder 8d den Magnetanker 14 von der Magnetspule 8b weg. Dies führt dazu, dass der Verriegelungshaken 41 aufgrund des Kniehebelgelenks 42 mit seinem Hakenabschnitt 41 a vom Verriegelungsbolzen 40 weg in Figur 10I nach links in eine Freigabestellung verschwenkt wird. In dieser Freigabestellung befindet sich der Hakenabschnitt 41a mit der Arretierungsöffnung 40b außer Eingriff, und der Türflügel 21 kann ohne weiteres geöffnet werden.

Die Kniehebelanordnung 42 ist vorzugsweise derart gestaltet, dass der Hakenabschnitt 41 a mit seiner in Figur 10I linken Verhakungsfläche in Bezug auf eine dieser zugewandten Verhakungsfläche der Arretierungsöffnung 40b einen spitzen Winkel derart einnimmt, dass eine Art Anlaufschräge nunmehr in Entriegelungsrichtung des Verriegelungsbolzens 40, d. h. in Tür-Öffnungsrichtung, vorhanden ist. Damit kann der Hakenabschnitt 41 a beim Türöffnen überfahren werden, was dazu führt, dass jederzeit ein klemmfreies Öffnen der angeschlossenen Tür möglich ist.

Um Energie für das Betreiben der Magnetspule 8b einzusparen, d. h. damit diese nicht ständig unter Spannung gehalten wird, selbst wenn beispielsweise der angeschlossene Türflügel 21 geöffnet ist, ist vorgesehen, die Magnetspule 8b erst dann mit Energie zu versorgen, wenn der Verriegelungsbolzen 40 mit dem Verriegelungshaken 41 in Eingriff steht.

Dazu weist der Verriegelungsbolzen 40 an seinem dem Verriegelungshaken 41 zugewandten Ende außenseitig angeordnete Magnete 46 auf. Im gezeigten Beispiel handelt es sich um einen Ring aus magnetisch permanent erregtem Material. Gelangt der Verriegelungsbolzen 40 nun beim Schließen des Türflügels 21 in die Tür-Feststellvorrichtung 20, bewegt sich dieser am Hakenabschnitt 41 a des Verriegelungshakens 41 vorbei. Dabei wird, wenn noch nicht geschehen, der Hakenabschnitt 41 a in Richtung vom Verriegelungsbolzen 40 weg verschwenkt. Dabei gelangt der Verriegelungsbolzen 40 mit seinem freien Ende mit der vorbeschriebenen Anlaufschräge des Verriegelungshakens 41 in Anlage und drückt diese von sich weg. Beim weitergehenden Hineinbewegen des Verriegelungsbolzens 41 gelangt die Arretierungsöffnung 40b in den Bereich des Hakenabschnitts 41 a, was zu einem Zurückschwenken des Verriegelungshakens 41 zum Verriegelungsbolzen 40 führt. Dadurch gelangt der Hakenabschnitt 41 a in die Arretierungsöffnung 40b gelangt und somit in Eingriff mit dem Verriegelungsbolzen 40.

Anstelle des Ringabschnitts 46 können beispielsweise auch in den Verriegelungsabschnitt 40a eingelassene, kleine Magnete vorgesehen sein.

Mit dem Verschwenken des Verriegelungshakens 41 wird aufgrund der Kniehebelgelenk-Magnetanker-Anordnung der Magnetanker 14 in Richtung Magnetspule 8b gedrängt bzw. translatorisch bewegt. Dies geschieht vorteilhafterweise in einem Maße, dass der Magnetanker 14 allein aufgrund des Hineinbewegens des Verriegelungsbolzens 40 in die Tür-Feststellvorrichtung 20 an der Magnetspule 8b zu liegen kommt.

Kurz vor Erreichen dieser Lage gelangt der vorbeschriebene Magnetring 46 in den Erfassungsbereich eines nicht dargestellten, im Gehäuse 22 ortsfest angebrachten Reed-Kontakts. Dies bewirkt, dass der Reed-Kontakt die Spannungsversorgung der Magnetspule 8b freischaltet. Dadurch wird die Magnetspule 8b mit Energie versorgt und kann den Magnetanker 14 in Verriegelungsstellung halten. Der Reed-Kontakt übernimmt somit die Rolle des Auslöseschalters 15 der vorherigen Ausführungsformen. Der Reed-Kontakt ist mit der Ansteuerschaltung 2 gekoppelt, die zum Ansteuern der Magnetspule 8b auch mit dieser gekoppelt ist.

Diese Realisierung der Aktivierung der Magnetspule 8b hat zwei Vorteile. Zum einen wird die Magnetspule 8b nur dann mit Energie versorgt, wenn es notwendig ist. Zum anderen muss die Magnetspule 8b nicht den Magnetanker 14 magnetisch anziehen sondern muss ihn lediglich halten. Dies verringert die Energieaufnahme der Magnetspule erheblich. Durch die somit erzielten Vorteile ist eine enorm energieeffiziente Tür-Feststellvorrichtung geschaffen.

Anstelle der Magnet-Reed-Kontakt-Anordnung kann auch ein Schließer-Schalter vorgesehen sein, der in Normalstellung einen Schaltkreis öffnet. Beim Hineinbewegen des Verriegelungsbolzens 40 stößt vorzugsweise die Anlaufschräge 41 a gegen den Schließer-Schalter und betätigt diesen in Schließrichtung, sodass die gleiche Wirkung erzielt wird wie mittels des Reed-Kontakts.

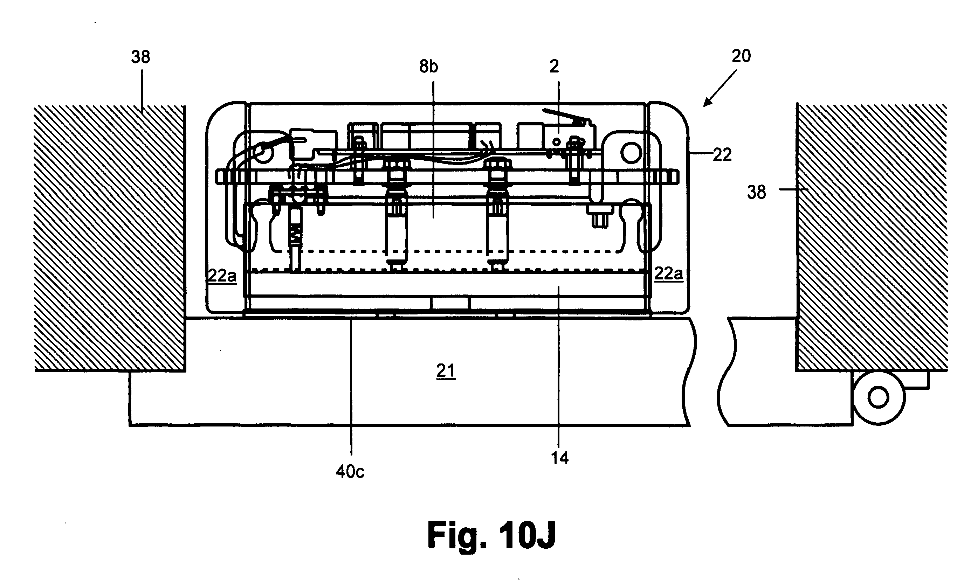

Figur 10J zeigt eine Türverriegelung bzw. Tür-Feststellvorrichtung 20 gemäß einer achten Ausführungsform der Erfindung. Anstelle einer mechanischen Verriegelung ist eine Verriegelung auf Basis eines Haftmagneten realisiert. Eine Ankerplatte 14 des Haftmagneten ist vorzugsweise über ein elastisches Zwischenstück mit einem beispielhaft als Platte ausgebildeten Anbringabschnitt 40c gekuppelt. Das elastische Zwischenstück ist im gezeigten Beispiel ein Gummilager, kann aber beispielsweise auch den gesamten Zwischenraum zwischen Ankerplatte 14 und Anbringabschnitt 40c ausfüllen. Das elastische Zwischenstück dient ähnlich der siebten Ausführungsform dem Toleranzausgleich zwischen Türflügel 21 und Haftmagneten. Der Haftmagnet weist vorzugsweise mehrere, nebeneinander angeordnete Magnetspulen 8b auf, sodass die Haltekraft des Haftmagneten erhöht ist. Das Auslösen des Haftmagneten kann wiederum mittels eines Reed-Kontakts erfolgen, der vorteilhafterweise derart in einem von zwei Seitenabschnitten 22a, 22a des Gehäuses 22 angeordnet ist, dass er mit der Ankerplatte 14 in Wechselwirkung tritt, sobald diese nahe den Magnetspulen 8b gekommen ist.

Alternativ sind die Magnetspulen 8b in Richtung Türflügel 21 federnd vorgespannt gelagert, sodass sie bei Auftreffen des Türflügels 21 in das Gehäuse 22 hinein gedrückt werden und damit einen nicht dargestellten Auslöseschalter aktivieren können.

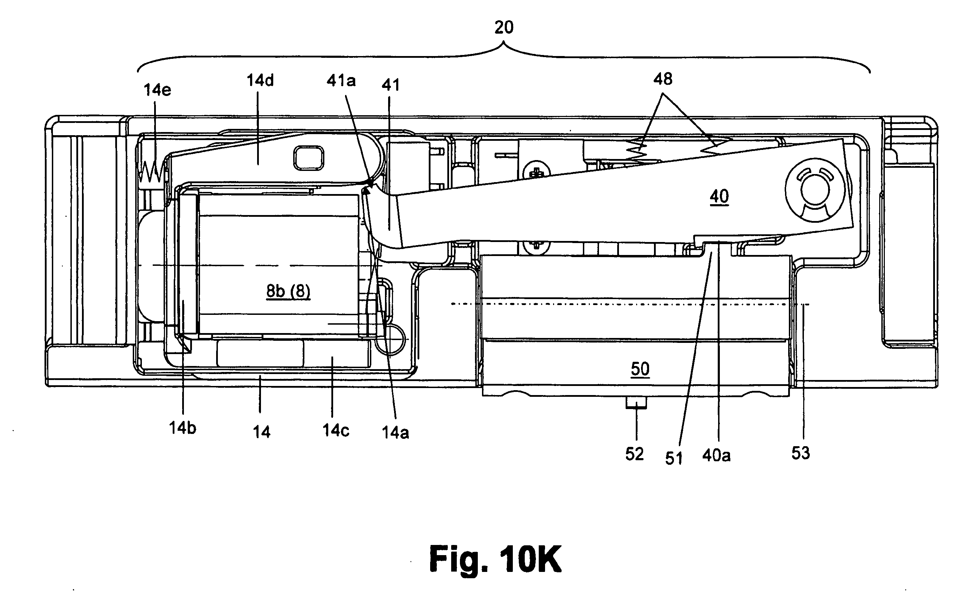

Figur 10K zeigt eine Türverriegelung bzw. Tür-Feststellvorrichtung 20 gemäß einer neunten Ausführungsform der Erfindung in Verriegelungsstellung. Auch hier wird ein Haftmagnet genutzt. Ein Anker 14 des Haftmagneten ist beispielhaft nach rechts Figur 10K offen u-förmig ausgebildet und translatorisch bewegbar gelagert.

In einem zwischen Schenkeln 14c, 14d dieses U gebildeten, nicht näher bezeichneten Zwischenraum ist eine Elektrospule 8b als Verbraucher 8 angeordnet. Vorzugsweise ist der Anker 14 mittels der Elektrospule 8b translatorisch geführt.

Beim Bestromen der Elektrospule 8b zieht diese den Anker 14 magnetisch nach rechts in Figur 10K. Wird die Elektrospule 8b nicht mehr bestromt, zieht eine Zugfeder 14e als Rückstellelement vorzugsweise nach links in Figur 10K von der Elektrospule 8b weg.

Vorzugsweise weist der Anker 14 eine gesonderte Ankerplatte 14b aus magnetisierbarem Material auf. Dadurch muss nicht das gesamte U, insbesondere die Schenkel 14c, 14d, aus relativ teurem, magnetisierbarem Material gebildet sein. Ferner ist es dadurch möglich, den nicht notwendigerweise magnetisierbaren Teil des Ankers 14 aus gleitgünstigem Material auszubilden. Die Ankerplatte 14b ist im gezeigten Beispiel ein plattenförmiges Teil, das mit einem ihm zugewandten Rand 8e der Elektrospule 8b in Wechselwirkung steht.

Die Türverriegelung bzw. Tür-Feststellvorrichtung 20 umfasst ferner einen als Schwenkhebel ausgebildeten Verriegelungsbolzen 40, der um eine Schwenkachse 40d in Richtung eines der Schenkel 14c, 14d frei schwenkbar gelagert ist. Der Verriegelungsbolzen 40 weist an seinem der Elektrospule 8b zugewandten Ende einen Verriegelungsabschnitt 49 mit einer Sperrfläche 49a bzw. einem Sperrrand auf. Ist der Anker 14 in die in Figur 10K gezeigte Stellung gezogen, kann der Verriegelungsbolzen 40 im Uhrzeigersinn in Figur 10K nur so weit geschwenkt werden, bis er mit seiner Sperrfläche 49a an einer korrespondierenden Sperrfläche 14a des Ankers 14 anliegt. D. h. der Verriegelungsbolzen 40 kann im Uhrzeigersinn nicht über die Position gemäß Figur 10K hinaus geschwenkt werden.

Die Türverriegelung bzw. Tür-Feststellvorrichtung 20 ist beispielhaft in ein Türschloss 10 integriert. Das Türschloss 10 umfasst eine Schwenkfalle 50, die um eine mittels einer Strichpunktlinie angedeutete Achse 53 schwenkbar gelagert ist, die im Wesentlichen senkrecht zur Schwenkachse 40d und vorzugsweise parallel zum Bewegungsweg des Ankers 14 verläuft.

In Verriegelungsstellung ist der Verriegelungsbolzen 40 in eine Position geschwenkt, in der dessen beispielhaft als Fläche ausgebildeter Verriegelungsabschnitt 40a in den Schwenkbereich des Verriegelungsabschnitts 51 ragt. Dadurch kann die Schwenkfalle 50 nur soweit in die Blattebene in Figur 10K geschwenkt werden, bis die Verriegelungsabschnitte 40a, 51 aufeinander aufliegen. D. h. der Verriegelungsbolzen 40 sperrt in Verbindung mit dem Anker 14 ein Schwenken der Schwenkfalle 50 in Öffnungsposition, in der das Türschloss 10 entriegelt wäre und damit die angeschlossene Tür geöffnet werden könnte.

Wird der Elektromagnet 8b nicht bestromt, wird der Anker 14 vorzugsweise vom Verriegelungsbolzen 40 weg bewegt, sodass dieser im Uhrzeigersinn weiter schwenken kann als durch den Verriegelungsabschnitt 40a begrenzt. Dadurch können die Verriegelungsabschnitte 40a, 51 gegeneinander außer Wirkeingriff gelangen, sodass die Schwenkfalle 50 in Öffnungsposition geschwenkt werden kann und damit die angeschlossene Tür freigibt. Das Schwenken des Verriegelungsbolzens 40 im Uhrzeigersinn über die Verriegelungsstellung hinaus erfolgt mittels Schwenkens des Verriegelungsabschnitts 51 der Schwenkfalle 50 in die Blattebene hinein, also gegen den Verriegelungsabschnitt 40a. Der Verriegelungsabschnitt 40a ist vorzugsweise mittels einer Fläche gebildet, die in Richtung Verriegelungsabschnitt 51 von diesem weg geneigt ist, also nicht parallel zur Blattebene von Figur 10K verläuft. Dadurch ist es der Schwenkfalle 50 möglich, sich an dem Verriegelungsabschnitt 40a diesen von sich weg drückend vorbei zu bewegen, wodurch der Verriegelungsbolzen 40 im Uhrzeigersinn geschwenkt wird.

Zusätzlich oder alternativ kann das Zurückstellen des Ankers 14 aufgrund des Drückens des Verriegelungsbolzens 40 mit seiner Sperrfläche 49a gegen die Sperrfläche 14a erfolgen. Zu diesem Zweck ist bzw. sind die Sperrfläche 14a und/oder die Sperrfläche 49a so ausgebildet, dass, bei fehlendem Bestromen der Elektrospule 8, der Verriegelungsbolzen 40 beim Schwenken im Uhrzeigersinn über die Verriegelungsstellung hinaus den Anker 14 selbsttätig in Richtung von der Elektrospule 8 weg, also nach links in Figur 10K, drückt. Dies kann mittels zueinander paralleler, mit dem Bewegungsweg des Ankers 14 eine spitzen Winkel einschließenden Sperrflächen 14a, 49a erfolgen. Allerdings ist es auch möglich, zumindest eine der Sperrflächen 14a, 49a in Richtung der korrespondierenden Sperrfläche 49a bzw. 14a konvex auszubilden. Dadurch können die Sperrflächen 14a, 49a nur unter Aufbringen einer vorbestimmten Kraft aneinander vorbeibewegt werden. Dies ist insbesondere bei bestromtem Elektromagneten 8 sinnvoll. Dadurch kann die Türverriegelung bzw. TürFeststellvorrichtung 20 ab einer vorbestimmten Überlast, ab der Beschädigungen zu befürchten sind, trotz elektromagnetischen Verriegelns entriegelt werden. Dadurch wird die Betriebssicherheit erhöht.

Vorzugsweise verfügt der Verriegelungsbolzen 40 über Rückstellfedern 48, die den Verriegelungsbolzen 40 in Richtung Verriegelungsstellung drängen. Dadurch ist gewährleistet, dass der Anker 14 und der Verriegelungsbolzen 40 bei bestromtem Elektromagneten 8 zumindest nicht dauerhaft in eine Stellung gelangen können, in der der Anker 14 nach rechts in Figur 10K so gegen den Verriegelungsbolzen 40 gedrückt wird, dass der Verriegelungsbolzen 40 nicht mehr in die in Figur 10K gezeigte Stellung gelangen kann.

Vorzugsweise ist ferner ein Fallenkontakt 52 exemplarisch in Form einer Steuerfalle vorgesehen. Diese wird beim Schließen einer gegenüberliegenden Tür beispielsweise von einer nicht abgebildeten, somit ebenfalls gegenüberliegenden Falle oder eines Riegels eines Türschlosses in den Türöffner 10 gedrängt. Exemplarisch kann dadurch die Bestromung des Elektromagneten 8 eingeschaltet werden. Sobald der Fallenkontakt 52 ein Stück weit aus dem Türöffner 10 hervorsteht, wird die Bestromung des Elektromagneten 8 aufgehoben.

Zusätzlich oder alternativ stellt der Fallenkontakt einen Sensor dar, mittels dessen ermittelbar ist, ob besagte Tür geöffnet oder geschlossen ist. Damit ist es möglich, beispielsweise einen etwaigen Einbruch zu detektieren. Dies ist beispielsweise der Fall, wenn die Verriegelung aktiviert ist, also der Elektromagnet beispielsweise bestromt ist, die Tür aber geöffnet ist. Aufgrund der Detektion solch eines Zustands kann beispielsweise ein Alarm abgesetzt werden.

Der Fallenkontakt 52 ist vorzugsweise Teil eines Tasters, der den Stromkreis des Elektromagneten 8 beim Hineinbewegen des Fallenkontakts 52 in den Türöffner 10 schließt und sonst öffnet. Es sind jedoch allen anderen Arten von Fallenkontakten 52, beispielsweise eine Lichtschranke, möglich.

Alle vorhergehend beschriebenen Ausführungsformen sind untereinander kombinierbar.

Beispielsweise kann die vorbeschriebene Koppelstufe bei allen Schaltungen Verwendung finden. Zudem kann die Schaltung von drittem Optokoppler und zweiter Treiberstufe anstelle in der Prozessorsteuerung auch in der Koppelstufe integriert sein. Zudem können die Koppelstufe, der Gleichspannungswandler 3 und die Datenauskopplungsschaltung in einem einzigen integrierten Schaltkreis oder Mikroprozessor realisiert sein.

Die oben beschriebenen Regelkreise, die eine Energieversorgung einer gesteuerten Schaltung 1 mit "Hilfsenergie" beinhalten, wenn die über den beispielhaft beschriebenen Anschluss 2/24V bereitgestellte Energieversorgung ausfällt, können auch ohne die beschriebene erste Treiberstufe ausgebildet sein. In dem Fall fehlt die Funktion einer Notabschaltung der gesteuerten Schaltung 2.

Zudem sind die vorgestellten Klemmblock-Lösungen und Bodenmuldenlösungen gegeneinander austauschbar.

### Bezugszeichenliste

- 1: Schaltung
- 2: Ansteuerschaltung
- 3: Spannungswandler
- 4: Rückkopplungs-Sensor
- 5: Türkontakt
- 6: Hall-Sensor
- 7: Optokoppler
- 8: Verbraucher
- 8a: Rückschlusskörper
- 8b: Elektrospule
- 8c: Federanschlag
- 8d: Rückstellfeder
- 8e: Rand
- 9: Boden
- 9a: Mulde

- 10: Türschloss
- 11: Riegel
- 12: Feder
- 13: Federanschlag
- 14: Anker
- 14a: Sperrfläche
- 14b: Ankerplatte
- 14c: Schenkel
- 14d: Schenkel
- 14e: Rückstellelement
- 15: Auslöseschalter
- 16: Federanschlag
- 17: untere Gehäusewand
- 17a: Gewindeabschnitt

- 20: Feststellvorrichtung
- 21: Türflügel
- 21a: Türbeschlag
- 22: Gehäuse
- 22a: Seitenabschnitt
- 23: Frontplatte
- 24: Schubstange
- 24a: Ringabschnitt
- 24b: Hülse
- 24c: zweiter Ringabschnitt
- 24d: Kragen
- 24e: unterer Endabschnitt
- 24f: Gummistopper
- 24g: Gewindeabschnitt
- 25: Führungselement
- 26: Zapfen
- 27: Gehäuseschlitz
- 28: Federelement
- 29: Sprengring

- 30: Nut
- 31: Hebel
- 32: Notaus-Schalter
- 33: Adresseinstellung
- 34: Schaltung
- 35: Ansteuerschaltung
- 36: Brandmelde-Anlage
- 37: Türsturz
- 38: Wand

- 40: Verriegelungsbolzen
- 40a: Verriegelungsabschnitt
- 40b: Arretierungsöffnung
- 40c: Anbringabschnitt
- 40d: Schwenkachse
- 41: Verriegelungshaken
- 41a: Hakenabschnitt
- 42: Kniehebelgetriebe
- 42a: Kniehebel
- 42b: Kniehebel
- 42c: Kniehebel
- 42d: Kniehebel
- 43: Führungsbahn
- 44: Anschlagplatte
- 45: Anlenkachse
- 46: Magnet
- 47: Feder
- 48: Feder
- 49: Verriegelungsabschnitt
- 49a: Sperrfläche

- 50: Schwenkfalle
- 51: Verriegelungsabschnitt
- 52: Fallenkontakt
- 53: Schwenkachse

- +VCC: Eingang für positive Versorgungsspannung
- GND: Masseanschluss

- A: Dateneingang
- B: Dateneingang
- C: Spannungsversorgungsanschluss
- D: Spannungsversorgungsanschluss
- S: Sensorleitung
- SE: Steuereingang
- SeE: Sensorsignaleingang
- SA: Steuerausgang
- SV: Spannungsversorgungs-Steuerausgang
- HS: Hall-Sensor-Eingang
- TK: Türkontakt-Eingang

- 1/A: Daten-Spannungssignal-Anschluss
- 2/24V: Versorgungsspannungsanschluss
- 3/B: Daten-Spannungssignal-Anschluss

- +24V A: Spannungsausgang
- +24V E: Spannungseingang

- P1: Prüfeingang
- P2: Prüfeingang
- P3: Prüfeingang

- K1: Relais
- K2: Relais

- T1: Transistor
- T2: Transistor

- Vₚ: Prüfspannungsanschluss

- I: Steuerausgang
- II: Steuerausgang
- III: Prüfeingang

## Patentansprüche

1. Regelung, aufweisend:
• einen zwischen einer gesteuerten Schaltung (1) und einen Sensoreingang (SE) einer Ansteuerschaltung (2) geschalteten Sensor (4),
• wobei die Ansteuerschaltung (2) ferner:
▪ zumindest einen Dateneingang (A, B), über den der Ansteuerschaltung (2) Daten eingegeben werden, die eine Repräsentation eines Sollzustands der gesteuerten Schaltung (1) umfassen, und
▪ zumindest einen Steuerausgang (SA) aufweist,
• wobei der Sensoreingang (SE) rückwirkungsfrei mit dem Sensor (4) gekoppelt ist,
• wobei die Ansteuerschaltung (2) eingerichtet ist, auf Basis von Eingangssignalen vom Sensor (4) und den Daten zu ermitteln, ob sich die gesteuerte Schaltung (1) im Sollzustand befindet oder nicht,
• wobei der Steuerausgang (SA) derart mit der gesteuerten Schaltung (1) gekoppelt ist, dass die Ansteuerschaltung (2) in der Lage ist, die gesteuerte Schaltung (1) rückwirkungsfrei in den Sollzustand zu bringen, sofern ermittelt wurde, dass sich die gesteuerte Schaltung (1) nicht im Sollzustand befindet.

2. Regelung gemäß Anspruch 1, wobei die gesteuerte Schaltung (1) zumindest einen elektrischen Verbraucher (8) umfasst.

3. Regelung gemäß Anspruch 2, wobei der Sollzustand ein Versorgen des zumindest einen elektrischen Verbrauchers (8) mit elektrischer Energie beinhaltet.

4. Regelung gemäß Anspruch 2 oder 3, wobei der Sollzustand ein Versorgen des zumindest einen elektrischen Verbrauchers (8) mit elektrischer Energie beinhaltet.

5. Regelung gemäß einem der Ansprüche 2 bis 4, wobei ein Sendeteil eines Optokopplers (7) zwischen Steuerausgang (SA) und Masse geschaltet ist, wobei ein Empfangsteil des einen Optokopplers (7) zwischen einem Schaltelement und Masse geschaltet ist.

6. Regelung gemäß einem der vorhergehenden Ansprüche, wobei der Sensor (4) mittels eines anderen Optokopplers gebildet ist, wobei ein Sendeteil des Optokopplers zwischen gesteuerter Schaltung (1) und Masse geschaltet ist und ein Empfangsteil des Optokopplers zwischen Sensoreingang (SE) der Ansteuerschaltung (2) und Masse geschaltet ist.

7. Regelung gemäß einem der vorhergehenden Ansprüche, wobei die gesteuerte Schaltung (1) eine Notaus-Schaltung eines elektrischen Türschlosses oder einer Tür-Feststellvorrichtung (20) ist.

8. Regelung gemäß einem der vorhergehenden Ansprüche, wobei die Daten auf ein Energieversorgungssignal für die Ansteuerschaltung (2) moduliert sind, das über Spannungsversorgungsanschlüsse (1/A, 3/B) der Regelung an diese angelegt wird.

9. Regelung gemäß einem der vorhergehenden Ansprüche, ferner aufweisend einen Gleichspannungswandler (3), der zwischen eine Energieversorgung und Spannungssignal-Anschlüssen (+VCC, GND) der Ansteuerschaltung (2) geschaltet ist.

10. Regelung gemäß einem der vorhergehenden Ansprüche, wobei die Ansteuerschaltung (2) in einem integrierten Schaltkreis ausgebildet ist.

11. Regelung gemäß Anspruch 10, wobei der integrierte Schaltkreis ein Mikroprozessor ist.

12. Regelung gemäß einem der vorhergehenden Ansprüche, wobei die Ansteuerschaltung (2) eingerichtet ist, an ein Bussystem angeschlossen zu werden.

13. Vorrichtung, aufweisend einen elektrischen Verbraucher (8), der mit einer Regelung gemäß einem der vorhergehenden Ansprüche verschaltet ist und mit einer Wirkeinrichtung der Vorrichtung wirkverbunden ist.

14. Vorrichtung gemäß Anspruch 13, wobei die Regelung in einem einem Gehäuse (2) der Vorrichtung aufgenommen ist.

15. Vorrichtung gemäß Anspruch 13 oder 14, wobei die Vorrichtung ein Türschloss (10), eine Türverriegelung (20), ein Drehflügelantrieb, Türschließer, Karusselltürantrieb, Schiebetürantrieb, Bogenschiebetürantrieb, Kreisschiebetürantrieb, Trennwandmodulantrieb oder Falttürflügelantrieb ist.

16. Vorrichtung gemäß einem der Ansprüche 13 bis 15, wobei der elektrische Verbraucher (8) eine Elektrospule (8b) umfasst, die mit einem Magnetanker (14) in Wirkverbindung steht.

17. Vorrichtung gemäß Anspruch 16, wobei der Magnetanker (14) mit einem Riegel (11) eines Türschlosses (10) in Wirkverbindung steht.

18. Vorrichtung gemäß Anspruch 16 oder 17, wobei die Wirkeinrichtung eine Verriegelungsvorrichtung (11, 12) ist, die mittels des elektrischen Verbrauchers (8) in eine Entriegelungsstellung und/oder eine Verriegelungsstellung bringbar angeordnet ist.

19. Vorrichtung gemäß Anspruch 16 oder 17, wobei die Wirkeinrichtung eine Feststellvorrichtung (20) ist, die mit dem Magnetanker (14) wirkverbunden ist.

## Claims

1. A control loop, including:
• a sensor (4) connected between a controlled circuit (1) and a sensor input (SE) of a trigger circuit (2),
• wherein the trigger circuit (2) furthermore includes:
• at least one data input (A, B) via which data are input to the trigger circuit (2), which data comprise a representation of a nominal condition of the controlled circuit (1), and
• at least one control output (SA),
• wherein the sensor input (SE) is non-reactively coupled to the sensor (4),
• wherein, based on input signals from the sensor (4) and based on the data, the trigger circuit (2) is adapted to determine whether or not the controlled circuit (1) is in the nominal condition,
• wherein the control output (SA) is coupled to the controlled circuit (1) in such a way that the trigger circuit (2) is able to bring the controlled circuit (1) non-reactively into the nominal condition as long as it has been determined that the controlled circuit (1) is not in the nominal condition.

2. The control loop according to claim 1, wherein the controlled circuit (1) comprises at least one electrical consumer (8).

3. The control loop according to claim 2, wherein the nominal condition includes supplying electrical energy to the at least one electrical consumer (8).

4. The control loop according to claim 2 or 3, wherein the nominal condition includes supplying electrical energy to the at least one electrical consumer (8).

5. The control loop according to any of the claims 2 to 4, wherein a transmitter part of an optical coupler (7) is connected between the control output (SA) and ground, wherein a receiver part of the one optical coupler (7) is connected between a switching element and ground.

6. The control loop according to any of the preceding claims, wherein the sensor (4) is configured by means of another optical coupler, wherein a transmitter part of the optical coupler is connected between the controlled circuit (1) and ground, and a receiver part of the optical coupler is connected between the sensor input (SE) of the trigger circuit (2) and ground.

7. The control loop according to any of the preceding claims, wherein the controlled circuit (1) is an emergency-off circuit of an electrical door lock or of a door hold-open device (20).

8. The control loop according to any of the preceding claims, wherein the data are modulated onto an energy supply signal for the trigger circuit (2), which signal is applied to the control loop via voltage supply terminals (1/A, 3/B) of the control loop.

9. The control loop according to any of the preceding claims, furthermore including a direct current converter (3), which is connected between an energy supply and voltage signal terminals (+VCC, GND) of the trigger circuit (2).

10. The control loop according to any of the preceding claims, wherein the trigger circuit (2) is configured in an integrated circuit.

11. The control loop according to claim 10, wherein the integrated circuit is a microprocessor.

12. The control loop according to any of the preceding claims, wherein the trigger circuit (2) is adapted to be connected to a bus system.

13. A device including an electrical consumer (8), which is interconnected to a control loop according to any of the preceding claims, and operatively connected to an operating apparatus of the device.

14. The device, according to claim 13, wherein the control loop is accommodated in a housing (2) of the device.

15. The device according to claim 13 or 14, wherein the device is a door lock (10), a door interlocking device (20), a swing leaf operator, a door closer, a revolving door operator, a sliding door operator, a curved sliding door operator, a circular sliding door operator, a partition wall module drive, or a folding door operator.

16. The device according to any of the claims 13 to 15, wherein the electrical consumer (8) comprises an electric coil (8b), which is in operative connection with a magnetic armature (14).

17. The device according to claim 16, wherein the magnetic armature (14) is in operative connection with a dead-bolt (11) of a door lock (10).

18. The device according to claim 16 or 17, wherein the operating apparatus is an interlocking device (11, 12), which is disposed to be able to be brought into an unlocking position and/or an interlocking position by means of the electrical consumer (8).

19. The device according to claim 16 or 17, wherein the operating apparatus is a hold-open device (16), which is operatively connected to the magnetic armature (14).

## Revendications

1. Circuit de réglage, présentant :
• un capteur (4) connecté entre un circuit commandé (1) et une entrée de capteur (SE) d'un système d'excitation (2),
• le circuit d'excitation (2) présentant en plus :
• au moins une entrée de données (A, B), par l'intermédiaire de laquelle des données sont introduites au circuit d'excitation (2), qui comprennent une représentation d'une situation nominale du circuit commandé (1),
• au moins une sortie de commande (SA),
• l'entrée du capteur (SE) étant accouplé au capteur (4) de façon non-réactive,
• le circuit d'excitation (2) étant aménagé à détecter, sur la base de signaux d'entrée du capteur (4) et des données, si le circuit commandé (1) est dans sa situation nominale ou non,
• la sortie de commande (SA) étant accouplé au circuit commandé (1) de telle façon que le circuit d'excitation (2) est en mesure d'amener de façon non-réactive le circuit commandé (1) en la situation nominale, tant qu'il a été détecté que le circuit commandé (1) n'est pas dans la situation nominale.

2. Circuit de réglage selon la revendication 1, dans lequel le circuit commandé (1) comporte au moins un consommateur électrique (8).

3. Circuit de réglage selon la revendication 2, dans lequel la situation nominale inclut une alimentation dudit au moins un consommateur électrique (8) en énergie électrique.

4. Circuit de réglage selon la revendication 2 ou 3, dans lequel la situation nominale inclut une alimentation dudit au moins un consommateur électrique (3) en énergie électrique.

5. Circuit de réglage selon l'une des revendications 2 à 4, dans lequel une pièce d'émission d'un optocoupleur (7) est connectée entre la sortie de commande (SA) et la terre, une pièce de réception dudit un optocoupleur (7) étant connectée entre un élément de commutation et la terre.

6. Circuit de réglage selon l'une des revendications précédentes, dans lequel le capteur (4) est aménagé par l'intermédiaire d'un autre optocoupleur, une pièce d'émission de l'optocoupleur étant connecté entre le circuit commandé (1) et la terre et une pièce de réception de l'optocoupleur étant connectée entre l'entrée du capteur (SE) du circuit d'excitation (2) et la terre.

7. Circuit de réglage selon l'une des revendications précédentes, dans lequel le circuit commandé (1) consiste en un circuit d'arrêt d'urgence d'une serrure de porte ou d'un dispositif d'arrêt de porte (20).

8. Circuit de réglage selon l'une des revendications précédentes, dans lequel les données sont modulées sur un signal d'alimentation en énergie pour le circuit d'excitation (2) lequel signal est appliqué au circuit de réglage par l'intermédiaire des terminaux d'alimentation en tension (1/A, 3/B) du circuit de réglage.

9. Circuit de réglage selon l'une des revendications précédentes, présentant de plus un convertisseur continu-continu (3) qui est connecté entre une alimentation en énergie et les terminaux de signaux de tension (+VCC, GND) du circuit d'excitation (2).

10. Circuit de réglage selon l'une des revendications précédentes, dans lequel le circuit d'excitation (2) est aménagé en un circuit de commande intégré.

11. Circuit de réglage selon la revendication 10, dans lequel le circuit de commande intégré consiste en un microprocesseur.

12. Circuit de réglage selon l'une des revendications précédentes, dans lequel le circuit d'excitation (2) est aménagé pour être raccordé à un système de bus.

13. Dispositif présentant un consommateur électrique (8) qui est interconnecté à un circuit de réglage selon l'une des revendications précédentes et est connecté de façon opérationnelle à un appareillage d'opération du dispositif.

14. Dispositif selon la revendication 13, dans lequel le circuit de réglage est accommodé dans un boîtier (2) du dispositif.

15. Dispositif selon la revendication 13 ou 14, dans lequel le dispositif est une serrure de porte (10), un verrouillage de porte (20), un entraînement de vantail tournant, un ferme-porte, un entraînement de porte tambour, un entraînement de porte coulissante, un entraînement de porte coulissante en arc, un entraînement de porte coulissante circulaire, un entraînement d'un module de cloison de séparation ou un entraînement de porte pliante.

16. Dispositif selon l'une des revendications 13 à 15, dans lequel le consommateur électrique (8) comporte une bobine électrique (8b) qui est en connexion opérationnelle avec une armature aimantée (14).

17. Dispositif selon la revendication (16), dans lequel l'armature aimantée (14) est en connexion opérationnelle avec un pêne (11) d'une serrure de porte (10).

18. Dispositif selon la revendication 16 ou 17, dans lequel l'appareillage d'opération consiste en un dispositif de verrouillage (11, 12), qui est agencé pour pouvoir être amené en une position de déverrouillage et/ou une position de verrouillage au moyen du consommateur électrique (8).

19. Dispositif selon la revendication 16 ou 17, dans lequel l'appareillage d'opération consiste en un dispositif d'arrêt (20) qui est connecté de façon opérationnelle à une armature aimantée (14).
